(19) Europäisches Patentamt
European Patent Office
Office européen des brevets

(11) **EP 4 192 041 A1**

(12) **EUROPEAN PATENT APPLICATION**

(43) Date of publication:
**07.06.2023 Bulletin 2023/23**

(21) Application number: **21211826.9**

(22) Date of filing: **01.12.2021**

(51) International Patent Classification (IPC):
**H04W 4/02** (2018.01)   **H04W 4/70** (2018.01)
**G01S 13/56** (2006.01)

(52) Cooperative Patent Classification (CPC):
**G01S 13/524; G01S 7/006; H04W 4/023;
H04W 4/70**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Fraunhofer-Gesellschaft zur Förderung
der angewandten Forschung e.V.
80686 München (DE)**
• **Technische Universität Dortmund
44227 Dortmund (DE)**

(72) Inventors:
• **REINSCH, Thomas
44801 Bochum (DE)**

• **JAMALI, Shahin
44801 Bochum (DE)**
• **WIETFELD, Christian
44229 Dortmund (DE)**
• **BÖCKER, Stefan
44137 Dortmund (DE)**
• **HÄGER, Simon
44139 Dortmund (DE)**

(74) Representative: **Schairer, Oliver Michael et al
Schoppe, Zimmermann, Stöckeler
Zinkler, Schenk & Partner mbB
Patentanwälte
Radlkoferstraße 2
81373 München (DE)**

(54) **APPARATUS AND METHOD FOR SMALL-SCALE MOTION SENSING**

(57)   An apparatus for motion detection according to an embodiment is provided. The apparatus comprises a phase difference determiner (110) configured for determining a phase difference for each of one or more signal connections between a transmitter and a receiver of a cellular network. Moreover, the apparatus comprises a motion detector (120) configured for detecting a movement depending on the phase difference of each of the one or more signal connections. Each of the one or more signal connections is a connection between the transmitter and the receiver for transmitting a signal of the signal connection from the transmitter to the receiver within the cellular network. The signal is a signal used for transmitting control data used for controlling user data communication within the cellular network, or is a signal used for supporting user data communication within the cellular network. The phase difference for each of the one or more signal connections indicates a difference between a first phase value of the signal of the signal connection received at the receiver of the signal connection at a first point-in-time and a second phase value of the signal of the signal connection received at the receiver of the signal connection at a different second point-in-time.

Fig. 1

EP 4 192 041 A1

**Description**

The present invention relates to an apparatus and a method for small-scale motion sensing, and, in particular, to an apparatus and a method for small-scale motion sensing in mobile radio networks, and, more particularly, to a novel system architecture for small-scale motion sensing exploiting 5G or upcoming 5G-Advanced or upcoming 6G millimeter wave (mmWave) channels. Moreover, the present invention relates to a precise determination of small scale and/or fine grained movements of objects in an environment using wireless communications networks.

Cellular networks provide an ubiquitous infrastructure which is continuously expanded to serve an always increasing number of user equipments with increasing data rates, reducing latency and increased connection robustness.

Sensing-based services are envisioned as a key feature of beyond 5G cellular networks (see [17]) and it is intended to make future networks perceptive of their environment (see [18]). A field of research is to reuse such data already available to enhance network operation (see [19]).

5G, 3GPP Release 15, has introduced support for communication in mmWave bands (Frequency Range 2) with beam management. An extension of the frequency range, in particular, in view of the forthcoming 6G standard, is expected and beam management algorithms are developed. IEEE 802.11 and its amendments 'ad', 'aj' and 'ay' may envisage similar extensions. In view of the increasing demand for powerful communication chips, it may be expected that mmWave communication and hardware therefore will become more performant, more easily available and cheaper.

While most design decisions for 6G sensing are yet up for debate, it is apparent that mmWave frequencies (> 24 GHz) will be exploited despite limitations in range reducing cell coverage to a few hundred meters [20]. Further, mmWave operation may be impacted by heavy rain, snowfall or vegetation. Hence, the inherent need of radar-like sensing for antenna sweeping contrasts the fine beam alignments required for mmWave-based communications and, together with multi-user requirements of operators for hotspot coverage, necessitates multi-beam capabilities of hybrid beamformers on network side [21]. However, the resulting transmit power sharing between the beams reduces the coverage and introduces interbeam interference which degrades sensing accuracy such that it must be compensated by well-designed beambooks.

Nonetheless, compared to sub-6 GHz sensing, the wider channels allow for better ranging resolution [22], and the increased carrier frequency for better ranging accuracy [23] and velocity resolution [20]. Additionally, high path loss and low diffraction reduce the need for clutter suppression schemes [22].

Moreover, even small commercial off the shelf (COTS) drones can be detected with sufficient signal-to-noise ratio (SNR) in a range of about 250m if pencil beams are facilitated [24]. These enable fine-grained angular sensing by means of their narrow beams [22], for example enabling very accurate positioning as shown in [13]. These beams also allow for suppression of interference and multipath at unwanted angles. Furthermore, multi-beam operation enables tracking of multiple targets at once [20].

Selective utilization of other beam pattern types, e.g., sector beams, further qualify mmWave transceivers as multi-mode sensors by being capable of fulfilling sensing requirements for long, medium and short range within just a single system, which is cheaper than using separate systems as in cars [25].

In the field of ground motion detection and in the field of infrastructure monitoring, small movements are measured, and the motion vector may, e.g., also be of interest. Such movements may, e.g., be caused by nature (such as earthquakes or wind) or by human activity (such as traffic, construction sites, or resource mining). For example, when wind is present, skyscrapers move horizontally by some millimeters within a few seconds (see [30]). Subsidence may typically cause ground surfaces to sink by 2.1 to 3.4 mm per year (see [31]). For the aforementioned examples precise movement measurements are particularly important for safety reasons.

Conventional measurement systems for detecting ground movements are mostly based on inertia effects, elongation, or gyro measurements (see [29]). Moreover, satellite-based technologies such as GNSS may, e.g., be used for detection (see [35]). While GNSS based sensors need a ground station, e.g., interferometric synthetic aperture radar (InSar) based concepts detect a vertical deformation without a ground station. In long time sequences, InSar concepts may, e.g., achieve a precision of some millimeters per year for vertical deformations (see [9]). GNSS based concepts may achieve a precision smaller than a millimeter per year (sub-mm/year) in long time sequences (see [10]). Optical fine ray concepts may likewise be employed.

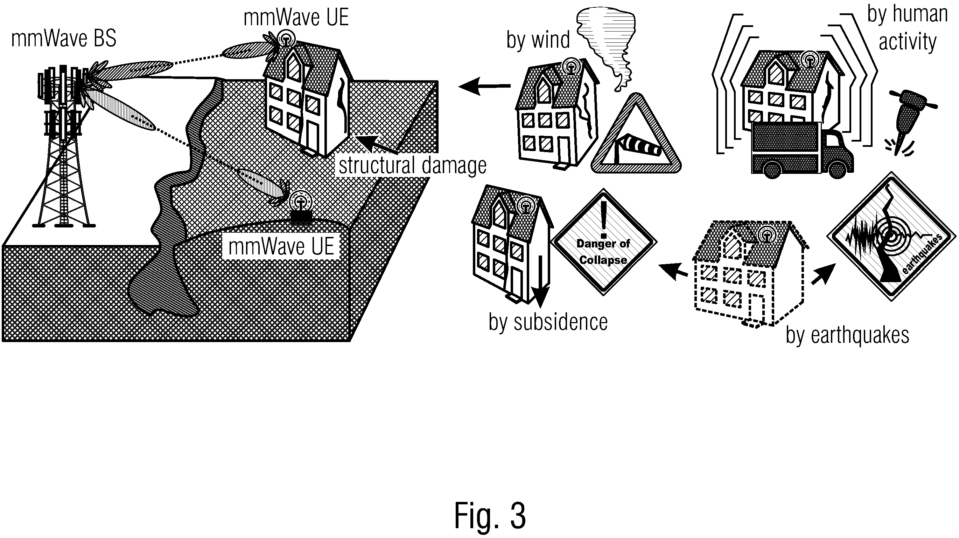

Fig. 3 relates to infrastructure monitoring and ground motion detection. In particular, Fig. 3 illustrates sensing of small-scale movements induced by natural (e.g. earthquakes, wind, waves) or anthropogenic (e.g. traffic, construction) sources of ground motion.

Although conventional sensor and measurement systems have been enhanced in recent years, still significant obstacles, such as installation and implementation problems, exist for implementing such systems for complex applications at remote or inaccessible places. Additional equipment maybe necessary, for example, caused by data transmission requirements, incompatibilities with existing surveillance systems; and operation of the equipment may only be conducted, e.g., by specifically trained personnel, etc.

Multiple enhancements to the methods used to detect ground motion and to monitor infrastructures have been conducted in the past, however, expensive equipment and staff is yet prohibitive for many small-sized and low-funded applications.

In [1], a FMCW radar based measurement system is presented, which can measure vibrations with 100 $\mu$m amplitudes and with a median measurement error of 3.4 $\mu$m (RE = -14.7 dB). Further in [1] measurements are refined by aligning single antennas of a one dimensional array for a single wave propagation path. Only the vibration amplitude is determined.

The relative error (RE) mentioned above may, e.g., be defined as:

$$\frac{\left\|\overrightarrow{movement_{measured}} - \overrightarrow{movement_{true}}\right\|_2}{\left\|\overrightarrow{movement_{true}}\right\|_2}$$

In [2], phase differences caused by vibrations of the throat are determined for recording audio signals.

In [3], a positioning system is provided with a measurement accuracy of a few centimeters, which analyses channel impulse response's SINR using beamforming.

In [4], channel phase information of subcarriers are used to determine breathing frequencies and heart frequencies using WLAN devices.

In [5], channel phases of WLAN subcarriers are used to measure a distance between a UE and a base station (gNB). Using relative signal arrival times, an angular measurement is conducted.

In [6], directional antennas and channel phase measurements of OFDM (orthogonal frequency-division multiplexing) subcarriers are used for movement detection.

In [7], a FMCW radar system is employed to measure vibrations caused by an airflow.

In [8], WLAN channel changes are used to reconstruct audio signals. Multipath propagation is used to refine vibration detection.

The infrastructure provided by cellular networks is in principle capable to analyze reflections of electromagnetic (EM) waves to obtain knowledge of the surrounding on an environment in a radar-like fashion: The extraction of data such as distance, velocity, azimuth and elevation angles as well as micro-Doppler / micro-distance features of any targets (static or in motion) allows the network to determine and recognize its immediate environment. Such networks are therefore referred to as perceptive mobile networks (PMNs).

Combining radar and communications technologies is appreciated, and is developed in the fields of Joint Radio/Radar Communication and Sensing (JCAS), Integrated Sensing and Communication (ISAC), Joint Communication-Radar (JCR), Dual-Function(al) and Radar-Communication (DFRC), and Radar-Communication (RadCom), and is envisaged for the upcoming 6G standard. Information from combining radar and communications technologies may, e.g., be employed to enhance the capabilities of the communications network itself, and/or may, e.g., be employed by the mobile network providers to offer new services, for example, sensing-assisted traffic and, for example, personal radar.

Current work in the prior art is still mainly related to issues on hardware level and signal processing level (see [12]).

The object of the present invention is to provide improved concepts for small-scale motion sensing.

The object of the present invention is solved by an apparatus according to claim 1, by an apparatus according to claim 13, by a method according to claim 14, by a method according to claim 15, and by a computer program according to claim 16.

An apparatus for motion detection according to an embodiment is provided. The apparatus comprises a phase difference determiner configured for determining a phase difference for each of one or more signal connections between a transmitter and a receiver of a cellular network. Moreover, the apparatus comprises a motion detector configured for detecting a movement depending on the phase difference of each of the one or more signal connections. Each of the one or more signal connections is a connection between the transmitter and the receiver for transmitting a signal of the signal connection from the transmitter to the receiver within the cellular network. The signal is a signal used for transmitting control data used for controlling user data communication within the cellular network, or is a signal used for supporting user data communication within the cellular network. The phase difference for each of the one or more signal connections indicates a difference between a first phase value of the signal of the signal connection received at the receiver of the signal connection at a first point-in-time and a second phase value of the signal of the signal connection received at the receiver of the signal connection at a different second point-in-time.

Moreover, an apparatus for motion detection according to another embodiment is provided. The apparatus comprises a phase difference determiner configured for determining a phase difference of signal reflections of a signal. Furthermore, the apparatus comprises a motion detector configured for detecting a movement depending on the phase difference of the signal reflections of the signal. The phase difference is a difference between a first signal reflection of the signal reflections of the signal that has been caused by a first reflection of the signal being transmitted at a first point in time by a transmitter of a cellular network and a second signal reflection of the signal reflections of the signal that has been caused by a second reflection of the signal being transmitted at a different second point in time by the transmitter of the cellular network. The transmitter, which transmits the signal to a receiver of the cellular network, is an entity of the cellular network.

Furthermore, a method for motion detection according to an embodiment is provided. The method comprises:

- Determining a phase difference for each of one or more signal connections between a transmitter and a receiver of a cellular network. And:

- Detecting a movement depending on the phase difference of each of the one or more signal connections.

Each of the one or more signal connections is a connection between the transmitter and the receiver for transmitting a signal of the signal connection from the transmitter to the receiver within the cellular network. The signal is a signal used for transmitting control data used for controlling user data communication within the cellular network, or is a signal used for supporting user data communication within the cellular network. The phase difference for each of the one or more signal connections indicates a difference between a first phase value of the signal of the signal connection received at the receiver of the signal connection at a first point-in-time and a second phase value of the signal of the signal connection received at the receiver of the signal connection at a different second point-in-time.

Moreover, a method for motion detection according to another embodiment is provided. The method comprises:

- Determining a phase difference of signal reflections of a signal. And:

- Detecting a movement depending on the phase difference of the signal reflections of the signal.

The phase difference is a difference between a first signal reflection of the signal reflections of the signal that has been caused by a first reflection of the signal being transmitted at a first point in time by a transmitter of a cellular network and a second signal reflection of the signal reflections of the signal that has been caused by a second reflection of the signal being transmitted at a different second point in time by the transmitter of the cellular network. The transmitter, which transmits the signal to a receiver of the cellular network, is an entity of the cellular network.

Moreover, computer programs are provided, wherein each of the computer programs is configured to implement one of the above-described methods when being executed on a computer or a signal processor unit.

Embodiments are not limited by current technical restrictions, leverage current technology, and bring communication networks benefits in to other sectors.

Some embodiments utilize current communication technologies and are forward-compatible with future communication technologies that are to be expected.

Some embodiments are based on the finding that for distance and/or direction and/or velocity measurements, millimeter waves (mmWave) with a frequency in the range between 24 GHz and 300 GHz appear to be particularly suitable: The higher frequencies as well as the available broader spectral band allow to increase and the precision and the exactness of distance and/or direction and/or velocity measurements. Additionally, the wave dispersion characteristics for these frequencies is different compared to the traditional Sub-6 GHz spectrum, such that multipath dispersion is strongly attenuated. For providing an acceptable coverage phased-antenna arrays may, e.g., be employed for these frequency bands. E.g., using beam management protocols, phased-antenna arrays allow to generate and to specifically align so-called pencil beams, to achieve constructive directive efficiency on the transmitter side and on the receiver side. Arrays with several antenna elements that, e.g., realize a full-analog or a hybrid analog-digital beamforming architecture thus allowing to fine-tune the angle between a user equipment (UE) and the base station (BS, gNB). E.g., hybrid beamformers may, e.g., serve a plurality of UEs at the same time.

The extraction of data such as distance, velocity, azimuth ($\phi$) and elevation ($\theta$) angles and micro-Doppler distance features of arbitrary targets, static or in movement, allows the network to determine information.

According to embodiments, parts of the envisioned 6G sensing capabilities can already be realized in current networks, e.g., ground motion detection and infrastructure monitoring.

Some embodiments employ 3D ray-tracing, wherein 5G mmWaves are employed to provide small-scale mobility tracking with sub-10 $\mu$m accuracy by exploiting pencil beam orientation and channel state information (CSI) phase information.

Embodiments of the present invention may, e.g., be employed in current sensing platforms for ground motion detection and infrastructure monitoring.

Some embodiments may e.g., support large numbers of commercial off-the-shelf (COTS) monitoring devices available at a relatively low cost.

Embodiments realize sustainable environmental motion monitoring reusing existing 5G infrastructure and, moreover, provision of public safety and disaster relief services.

Some embodiments provide a mmWave channel application, that can be realized sustainably by exploiting current 5G networks.

In some embodiments, an architecture is provided that may, e.g., complement an existing measurement infrastructure for such applications, and enables dense deployment of sensors by reusing existing mmWave cellular infrastructure and mobile devices, and by leveraging the wireless channels in-between.

In embodiments, precise, automated, fast, and intelligent systems are provided.

According to embodiments, concepts are provided for sensing applications that realizes to track 3D small-scale user equipment (UE) movements with $\mu$m-range accuracy, and combines that movement sensing application with the possibility of high data rates and reliable low latency data transmissions of 5G New Radio (NR), possibly further combined with associated edge computing capabilities for artificial intelligence (AI) analysis concepts.

Some embodiments provide a sustainable secondary use of 5G mmWave for ground motion sensing and infrastructure monitoring, for research and safety purposes, using COTS UEs.

In an embodiment, for a lightweight deployment, a single UE may, e.g., be configured to detect small-scale movement by evaluating CSI phase changes. In case of such event detection through one UE, deployment of multiple UEs, all of which align their beams using known beam management procedures, allows for precise reconstruction of 3D movement using movement vector estimation, such that a 3D movement tracking error is realized that is well below 10 $\mu$m.

In some embodiments, a single UE is used, which jointly leverages several available, distinct multipath opportunities to the mmWave network, e.g. at once (hybrid beamformer) or right after another (analog beamformer), as an analog BF does not allow transmission/reception to/from multiple angles at once.

According to some embodiments, on-board sensor data and AI concepts are provided.

In some embodiments, movement-caused angular changes may, e.g., be determined, and phase-based ranging may, e.g., be realized.

In contrast to [1], embodiments of the present invention do not use a radar system, but instead use signals of a wireless communications network.

In contrast to [2], some embodiments of the present invention employ alignment information.

Embodiments of the present invention employ a channel signal phase in contrast to [3] which uses the SINR.

In contrast to [4], embodiments of the present invention measure movements, use mmWave frequency bands and some of the embodiments may, e.g., depend on an antenna alignment.

In contrast to [5], embodiments of the present invention use mmWave frequencies to achieve a higher precision and realize a tracking of movements in an environment.

In contrast to [6], embodiments of the present invention employ mmWave frequencies and beamsteering with directional antennas.

In contrast to [7], embodiments of the present invention do not employ a FMCW radar, but instead employ a wireless communications network.

In contrast to [8] which relates to capturing audio data, embodiments of the present invention employ mmWave frequencies of a wireless communication system to achieve high-precision measurements.

According to some embodiments, mmWave UEs are mounted such that a stable connection to the network is established, for example, to primarily establish a Fixed Wireless Access (FWA) broadband connection. That means that in the mmWave range the wireless connection is exhibited to as few disturbances, for example, caused by pedestrians and cars, as possible. Therefore, ideally, the UEs should be mounted in free field or in a height of a few meters at a facade of a building. After turning on, the mmWave UEs connect with the mmWave network, at least inter alia, using spatially separated propagation paths (channels) between individual UE-BS pairs. During the process of connecting (initial access), pencil beams of the UEs and of the BSs are aligned automatically and precisely. This information (azimuth and elevation angles) is known for the terminals, as each transceiver (gNBs, UEs) knows their respective required angles from their side of view, and will be used later on. Moreover, in mobile wireless networks it is common that each mobile channel is estimated at certain time intervals using standardized signaling processes. By this, a complex valued data vector is determined over the channel frequencies for discrete points-in-time, respectively. Now, if the studied object/considered object moves, or if the ground/building/infrastructure moves, whereat or whereon the UEs fixedly mounted, then the data vector changes from original position A to new position B.

Using relative channel phase changes for the respective frequencies, the movement in propagation direction of the EM mmWave can be estimated, which is known from the alignment information. Combining a plurality of such measurements for different channels for separate propagation paths allows to analytically reconstruct an overall 3D movement of the ground or of the considered object/studied object. For this purpose, the concept of velocity vector estimation from radar technology are taken into consideration. Not only a 3D movement may, e.g., be estimated, but by taking the channel estimation intervals (dynamically scalable up to the kHz range) into account, a 3D velocity may, e.g., be likewise estimated. Regarding the channel estimation intervals, note should be taken that even higher rates than 2 kHz are possible. At present, for example, 5G is limited to a 112 kHz rate (120 kHz subcarrier spacing, SCS) on a symbol level (14 symbols per slots) in data channels.

According to embodiments, a system architecture according to embodiments allows to analyze a movement of a mobile user equipment.

Additionally, mobile edge computing capabilities of mobile wireless networks may, e.g., be employed, because a vast plurality of complex overall channel measurement data is available using a corresponding measurement technique and internal sensors.

In embodiments, artificial intelligence algorithms such as deep learning and physics-informed machine learning may, e.g., be employed, to analyze the data in an efficient and centralized manner.

An advantage compared to conventional analyzing system is achieved by utilizing the uniformed signal format at all measurement locations, enabling AI-based algorithms applications, which may, e.g., be similar to standardized wireless signals.

The new analysis system may, e.g., be configured for self-training, e.g., concurrent and Interleaved self-training, and may, e.g., self-improve whenever a measurement is conducted which results in a higher exactness in lower computational costs of the analysis of the system. Therefore, these optional extensions achieve a better determination of system decisions.

Moreover, using movement information from signal sources for determining mechanical ground deformations (e.g., caused by heavy load traffic) and further using additional measurement devices for detecting ground vibrations, an image of the underground may, e.g., be generated.

In an embodiment, multiple reflections of electromagnetic waves may, e.g., be employed to detect movements in a room similar to a radar application.

Embodiments of the present invention provide a new and inventive flexible, radio based exact measurement system based on a combination of the following concepts:

Channel phase difference (e.g., using differential channel state information, CSI, phase measurements) based movement estimation in EM propagation direction may, e.g., be employed, which is mainly estimated depending on an antenna alignment (e.g.,
beamsteering algorithms). Information on channel estimation and on antenna alignment may, e.g., be employed, e.g., using wireless mobile signaling concepts.

Using a plurality of the results as determined above allows to reconstruct fine granular 3D movements by employing a velocity movement vector estimation concept. Three or more spatially separated channels S between UE and BS arrays may, e.g., be employed, for example as follows:
If more than one UE is employed: 1 BS may, e.g., serve S UEs, wherein the S UEs are located at different positions; or S BSs serve 1 UE, wherein the S BSs are located at different positions; or a combination of both approaches, wherein M BSs serve N UEs using S channels, wherein $S \leq M \cdot N$. Here, S, M and N are positive integer values.

Additionally or alternatively, a plurality of different spatially separated propagation paths (multipath clusters) may, e.g., simultaneously be used, if at least one hybrid analog-digital beamformer is employed on the measurement side. If said beamformer has L RF chains, $S \leq L$ propagation paths may, e.g., simultaneously be analyzed, if the measurement environment allows. (The number of multipath clusters $Z \geq S$ depends on environment characteristics and further depends on the spatial characteristics of the mobile radio propagation paths of the individual UE-BS pairs. For example, four or five clusters (this is the typically expected value for Z in typical European towns or large metropolises, see [34]) in the mmWave frequency range may, e.g., be employed.) Using such a hardware architecture is considered particularly suitable to fully take wave propagations into account. If only analog beamformers are employed, then the L propagation paths are not analyzed at the same time, but are to be measured sequentially using individual signaling.

Embodiments are provided that are resource efficient and flexibly adjustable to a particular application. The following parameters may, e.g., be adjustable:

- The time interval between the channel measurements and estimations. Nonetheless, in some embodiments, a plurality of subsequent channel estimations may, e.g., be aggregated over time (repetition) to compare more accurate channel estimations with each other.

- The number of frequencies employed, a bandwidth of the employed frequency bands and a subcarrier spacing between the subcarriers employed. However, in embodiments, carrier aggregation and/or frequency hopping may, e.g., be employed to increase the bandwidth. Likewise, some frequencies may, e.g., selectively be ignored to avoid interference and to realize optimized resource efficiency purposes.

- If S > 3, the number of employed spatially separated propagation paths S may, e.g., be reduced up to S = 3, e.g., by not using available UEs, or BSs, or multipath clusters. By this, propagation paths with adverse condition may be excluded for measurement accuracy or resource efficiency optimization purposes.

- The operation stages and operation modes: In stage 1, it may, e.g., be measured using a single spatially separated propagation path, whether or not small-scale movements occur. Using the antenna alignment, a corresponding 3D movement may, e.g., estimated in a simplified manner. In stage 2, 3D movements are reconstructed depending on a plurality of spatially separated propagation paths with high precision adapted to the application.

In an embodiment, instead or in addition to downlink (DL) channel measurements, uplink (UL) channel measurements at the network-side and an antenna alignment at the network side may, e.g., be employed, e.g., using respective signaling. In particular embodiments, separate DL and UL measurements may, e.g., be combined centrally.

In embodiments, a modular system with forward compatibility (future proof) to new mobile radio standard releases (e.g., cellular radio or WLAN) may, e.g., be provided, for example, with respect to 5G-Advanced and 6G and with respect to further new technologies, e.g., in the fields of AI and (integrated) sensing (technology). Some embodiments provide a piggyback solution and thus provide a secondary usage on the basis of an existing system and may, e.g., be dynamically configurable, for example, by conducting a mmWave based measurement, and the system may, for example, be extended by taking further sensor data into account or by employing AI concepts.

The achieved precision with respect to the measured movement based on current 3D ray tracing data results of some embodiments becomes close to 1 $\mu$m measurement precision. Depending on scenario and setup: one should expect sub-10$\mu$m accuracy. This would fulfil requirements in the industrial field (see [1]). However, multipath propagation as well as channel characteristics (e.g., depending on environment and locations of the UEs) influence the measurement precision. Noise, interference and employed hardware have a negative effect on the precision; however, as described above, the provided system architecture of embodiments provides means to address these issues. If the accuracy becomes worse, deployment of more UEs or use of more BS or more paths should be considered. Another option is to change the mounting of already employed UEs, e.g. by re-mounting at a nearby position.

The concepts provided by embodiments achieve precisions that may, e.g., also be provided by some conventional fiber optical elongation measurements (e.g., Brillouin dispersion), see [11] and the references cited therein. In contrast to conventional concepts, however, embodiments use an already existing infrastructure for an additional application field. 5G or 6G wireless communication systems may, e.g., be employed for providing an additional usage such as detecting ground movements or detecting movements of UEs or of BSs. It should be noted that wireless communication is often employed for remote monitoring purposes of sensors - or just to check whether the device is not damaged, is not getting too hot (sun) or has enough battery power left.

The provided embodiments inter alia provide advantages as resource efficiency is increased compared to conventional systems and as no specifically trained personnel is required for operation. Embodiments benefit from the ubiquity and high degree of standardization of mobile networks as well as inherent automatic procedures and simple extensibility by further measurement devices as well as from the availability of user equipments.

In embodiments, signals for communication which are transmitted and received are employed for a further purpose, namely for measuring movements. Due to the ubiquity and due to the high degree of standardization in mobile communications, the provided concepts are quite future-proof.

According to embodiments, movements of single measurement devices and of the complete measurement object (for example, a skyscraper) can be determined with micrometer precision. In embodiments, localizing an original position of the measurement devices may, e.g., be realized using the beamsteering concepts provided in e.g., [13] or in e.g., [14]. Furthermore, in embodiments, conventional measuring sensors may, e.g., be modularly integrated.

Some embodiments may, e.g., be realized for mmWave frequencies. The propagation characteristics of the mmWave spectrum differ significantly from the propagation characteristics of the sub-6 GHz range: Path loss effects are stronger regarding waves in the mmWave spectrum, because of more significant free-space path loss, greater atmospheric absorption by oxygen and water vapor, greater attenuation by rain and snow as well as increased penetration loss by penetration through vegetation, typical building materials such as bricks, cement and glass, and through the human body. In addition, reduced diffraction of waves at sharp edges occurs. In total, these effects provide that mmWave propagation is similar to the propagation of light, and that an increased number of shadowing regions exist, such that line-of-sight (LOS) conditions between base station and user equipment appears preferable for wireless mmWave connections. Nonetheless, in some embodiments, non-line-of-sight (NLOS) paths may, e.g., be employed. For both LOS and NLOS paths, these paths are specifically aligned by antennas (beamsteering) to compensate the increased path loss. mmWave communication is thus, in general, directional, in contrast to sub-6GHz communications, which is omnidirectional communication, and which is to some extent even limited by multipath propagation. Moreover, determining multipath clusters or determining a single dominant propagation path is not always possible by beamsteering alone such that additional angle finding algorithms using inherent beam management measurement data shall be employed optionally. A further difference is represented by the more intensive broadband usage of the mmWave spectrum, what results in that in addition to the better spatial separation, the channel can also be separated better in the time domain (see [15]).

According to embodiments, phase information is used instead of determining a signal strength at a reception point or instead of determining a signal-to-interference-and-noise ratio (SINR).

Embodiments do not employ a radar system for positioning. A radar system is exclusively used for position determination and movement determination. There is no secondary usage of radar systems, and transmitting data reliably with high data rates via radar system technology is not possible. According to embodiments, however, a channel may, e.g., be used for the above-described measurements and at the same time act as a fixed wireless access (FWA) broadband channel for a household or a building. In addition to the concepts provided by embodiments, continuous wave (CW) radar or frequency-modulated continuous wave (FMCW) radar may, e.g., additionally be employed.

Some embodiments employ two-dimensional antenna arrays with analog or hybrid beamforming architecture instead of small linear array with digital beamforming architecture. Digital beamformer realize to catch a signal for reception at each antenna selectively, and provide specific postprocessing possibilities. In contrast, using analog or hybrid beamformer allows to determine spatial information by a plurality of transmissions. For the mmWave frequencies, however, analog or hybrid beamformer are preferable for compensating the path loss, e.g., for cost, energy, and spatial efficiency (see [16]). Using a one-dimensional/linear array, i.e., antennas along one axis (for example, uniform linear arrays, ULAs) allows a beamsteering only along an azimuth angle, or only along an elevation angle. Two-dimensional arrays, however, such as uniform planar arrays (UPAs) allow to align pencil beams in azimuth and in elevation directions. Such an approach is preferable for mmWaves, as an UE may, e.g., positioned flat on a table or may be vertically attached to an ear.

Embodiments may, e.g., employ azimuth and elevation information may, e.g., be employed for reconstructing small-scale three-dimensional movements.

Moreover, embodiments may, e.g., employ different antenna alignments and beamsteering. In embodiments small step 3D movements may, e.g., be detected.

In embodiments, beamsteering may, e.g., be employed to determine position information using the concepts provided in [13] or in [14].

Embodiments of the present invention may, e.g., be used in conjunction with other positioning systems (e.g., GPS or Galileo for absolute measurements; GNSS for referencing the BS or UE) what is particularly useful, if a small-scale user mobility in $\mu$m range or mm range is to be expected. Such a combination is particularly useful to support movements detection at typical inner-city velocities. In a specific example, using $vkm/h$ = 40 $km/h$, $r$ = 2 $kHz$, $f_0$ = 26.5 $GHz$ and $c_0 \approx 3 \cdot 10^8$ $m/s$, it follows by $d = v_{km/h}$ / $(3.6 \cdot r)$ = 5.6 $mm$ < 5.7 $mm$ = $\lambda/2$ = $c_0$ / $(2 \cdot f_0)$ that 3D velocities up to 40 $km/h$ are supported with such a configuration, where factor 3.6 comes in due to switching vkm/h from km/h to m/s

Thus, not only inner-city navigation and positioning services benefit from the provided embodiments, but also the mmWave network itself benefits, as such precise information may, e.g., support beam tracking, used for maintaining a mobile mmWave connection.

In some scenarios, devices according to embodiments are attached in a fixed manner to a studied object, such as buildings.

In other scenarios, devices according to embodiments are employed for mobile equipment, such as drones.

In further scenarios, a UE (e.g., a smartphone) may, e.g., temporarily placed on a (nonslip) table surface.

In still further scenarios, measurement embodiments may, e.g., be employed to extract vibration frequencies, e.g., based on the concepts provide in [4], for reconstructing audio signals, e.g., based on the concepts provided in [2] or [8], and for reconstructing other parameters.

The provided modular system architecture of some embodiments comprises components which further improve the measurement accuracy (e.g., by using internal sensor data) for optimizing an efficient and centralized calculation of movements (e.g., by using AI-based concepts) by using standardized and typical capabilities of mobile radio networks and its devices.

Some embodiments combine DL und UL measurement concepts.

Embodiments of the present invention provide improved localization concepts for a plurality of applications by using spatially separated wave propagation paths together with channel-based distance measuring.

In some embodiments, (e.g., small) changes in the antenna alignment and channel phase-based distance measurements may, e.g., be taken into account for realizing improving localization concepts.

Moreover, the provided modular system may, e.g., be configured to measure small changes of the antenna alignment (e.g., by conducting beam tracking and switching) to enhance the precision of determining small-scale 3D movements.

Embodiments provide a secondary usage for mmWave mobile radio networks to detect small-scale relative movements with three-dimensional precision in the $\mu$m-range.

By this secondary usage, a ubiquitous sensor network is provided as a piggyback solution based on a mmWave mobile radio network.

By making use of established mobile radio standards (e.g., for mobile radio and for WLAN), the provided system is minimally invasive and internationally applicable by conducting minor adjustments to local specifics (such as employed frequency ranges).

Moreover, the provided system is forward compatible with new mobile radio standards releases in cellular radio (for example 5G-Advanced and 6G) and WLAN and other upcoming techniques, for example, in AI and sensor technology. Furthermore, the provided concepts are forward compatible with a future use of Terahertz (THz) frequencies. That might increase accuracy due to smaller wavelength.

Embodiments provide a highly adaptive measurement system which may, e.g., employ module modules for measurement refinement, and, on the other hand, may, e.g., adapt physical resources to requirements of the measurement application.

According to an embodiment, the mobile radio network may, e.g., purposely use reflections of different, emitted signals, e.g., reference signals of a BS (active sensing). A user equipment is not needed in such an embodiment. For transmission and reception, different antenna patterns may, e.g., be employed to make use of different propagation paths.

In an embodiment, motion detection and estimation for objects from afar is provided, for example, in the context of 6G joint communication and radio/radar sensing (JCAS), without a need for UEs. According to an embodiment, a BS may, e.g., be configured to use a link to itself. In an embodiment, a UE may, e.g., be configured to use a virtual link to itself. By this, a reflection of the signal transmitted from one entity to itself is employed.

In the following, embodiments of the present invention are described in more detail with reference to the figures, in which:

Fig. 1 illustrates an apparatus for motion detection according to an embodiment,

Fig. 2 illustrates an apparatus for motion detection according to an embodiment, further comprising a beam-management based angle determiner.

Fig. 3 illustrates sensing of small-scale movements induced by natural or anthropogenic sources of ground motion.

Fig. 4 illustrates an application example according to an embodiment.

Fig. 5 illustrates a millimeter wave sensing system according to an embodiment.

Fig. 6 illustrates a setup, wherein Fig. 6(a) illustrates a setup of a wall-mounted UE aligning a pencil beam to incident mmWaves, and wherein Fig. 6(b) illustrates a simulated pencil beam pattern.

Fig. 7 illustrates an infrastructure monitoring scenario according to an embodiment.

Fig. 8 illustrates a subsidence monitoring scenario according to an embodiment.

Fig. 9 illustrates multiple UE deployments, wherein Fig. 9(a) illustrates multi-UE deployments for the infrastructure scenario of Fig. 7, and wherein Fig. 9(b) illustrates multi-UE deployments for the subsidence scenario of Fig. 8.

Fig. 10 illustrates a comparison between a measured movement and a true movement of a skyscraper scenario according to an embodiment.

Fig. 11 illustrates a relative error of the movement measurement of the skyscraper scenario according to an embodiment.

Fig. 12 illustrates a distribution of a mean relative error in the skyscraper scenario according to an embodiment.

Fig. 13 illustrates a distribution of a mean relative error in a subsidence scenario according to an embodiment.

Fig. 14 illustrates a comparison between a measured movement and a true movement of the subsidence scenario according to an embodiment.

Fig. 15 illustrates a relative error of a movement measurement of the subsidence scenario according to an embodiment.

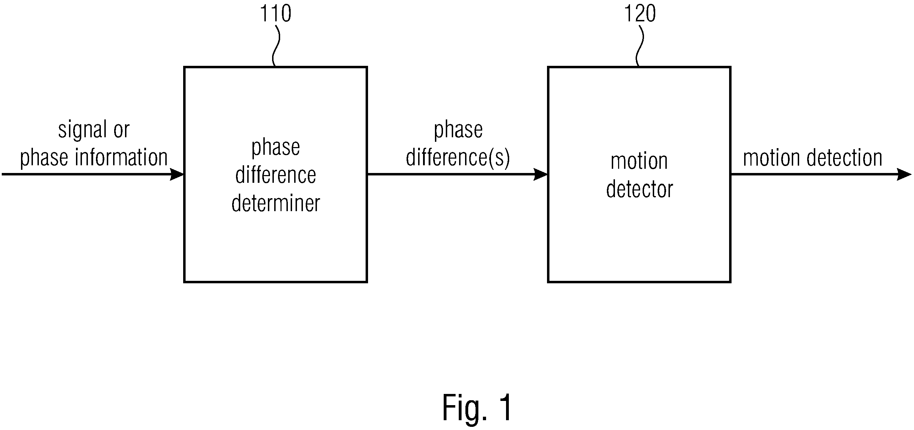

Fig. 1 illustrates an apparatus for motion detection according to an embodiment.

The apparatus comprises a phase difference determiner 110 configured for determining a phase difference for each of one or more signal connections between a transmitter and a receiver of a cellular network.

Moreover, the apparatus comprises a motion detector 120 configured for detecting a movement depending on the phase difference of each of the one or more signal connections.

Each of the one or more signal connections is a connection between the transmitter and the receiver for transmitting a signal of the signal connection from the transmitter to the receiver within the cellular network.

The signal is a signal used for transmitting control data used for controlling user data communication within the cellular network, or is a signal used for supporting user data communication within the cellular network.

The phase difference for each of the one or more signal connections indicates a difference between a first phase value of the signal of the signal connection received at the receiver of the signal connection at a first point-in-time and a second phase value of the signal of the signal connection received at the receiver of the signal connection at a different second point-in-time.

When reference is made to a transmitter, it is understood that the transmitter may, e.g., also comprise receiving capabilities, and thus can be considered as a (first) transceiver. Analogously, when reference is made to a receiver, it is understood that the receiver may, e.g., also comprise transmitting capabilities, and thus can be considered as a (second) transceiver.

When reference is made to detect a motion or to detect or to measure a movement, in embodiments of the present such a motion/movement may, e.g., relate to a relative movement of the receiver with respect to the transmitter or of the transmitter with respect to the receiver. For example, a movement of a user equipment may, e.g., be detected or measured with respect to a reference/reference point/reference entity, for example, a base station. If, however, a movement of the user equipment with respect to the base station is indeed detected or measured, such a movement is a relative movement relative with respect to the reference. In other words, if a movement of a device with respect to the reference is detected with respect to the reference, it may be that the device has moved or that the reference has moved or that both the device and the reference have moved.

Therefore, in embodiments, detecting or measuring a motion or a movement may, e.g., be considered as / may, e.g., comprise detecting or measuring a relative motion or a relative movement with respect to a reference (a reference point) / with respect to one or more references (one or more reference points). In some embodiments, a reference point may, e.g., be a base station or a user equipment or another kind of signal transmitter or signal receiver or signal transceiver or an arbitrary reference point in an environment.

In an embodiment, the motion detector 120 may, e.g., additionally employ data from a global navigation satellite system for a reference location measurement, or from a gyroscope, or from an accelerometer, or from a velocity meter, or from a strain meter, or from a gauge, or from a device for reference location measurement, or from a device for level measurement.

According to an embodiment, for each of the one or more signal connections:

1) The transmitter of the signal connection is a base station of the cellular network, and the receiver of the signal connection is a user equipment of the cellular network. For example, such a scenario may, e.g., be used to detect a (relative) movement of the user equipment with respect to a location of the base station, or vice versa. Or:

2) The transmitter of the signal connection is a user equipment of the cellular network, and the receiver of the signal connection is a base station of the cellular network. For example, such a scenario may, e.g., be used to detect a (relative) movement of the base station with respect to a location of the user equipment, or vice versa. Or:

3) The transmitter of the signal connection is a user equipment of the cellular network, and the receiver of the signal connection is a another user equipment of the cellular network (e.g., a sidelink; device-to-device communication, D2D); or the connection may, e.g., even be a connection of the user equipment with itself. Then, phase-changes due to a single movement may double due to a single movement. Or:

4) The transmitter of the signal connection is a (first) base station of the cellular network, and the receiver of the signal connection is a another base station of the cellular network (or even the base station that has transmitted the signal. Then, phase-changes due to a single movement may double due to a single movement). For example, such a scenario may, e.g., be used to detect a (relative) movement of the other base station with respect to the (first) base station, or vice versa. For example, in such a scenario, a movement of a building onto which a base station is mounted may, e.g., be measured.

In embodiments, where no additional data is used for estimating motion / a movement, one sensor (e.g., one receiver of one connection) may, e.g., be sufficient for estimating a movement in one dimension; two sensors (e.g., two receivers of two connections) may, e.g., be sufficient for estimating a movement in two dimensions; and three sensors (e.g., three receivers of three connections) may, e.g., be sufficient for estimating a movement in three dimensions. Even one sensor is sufficient for estimating a movement in three dimensions as also the angle information is already determined, e.g., by the user equipment and the base station, and in addition to that, phase information is employed. Thereby, an information for three dimensions can be obtained, however, an inaccurate one. Multiple paths and angle information improve the estimation further.

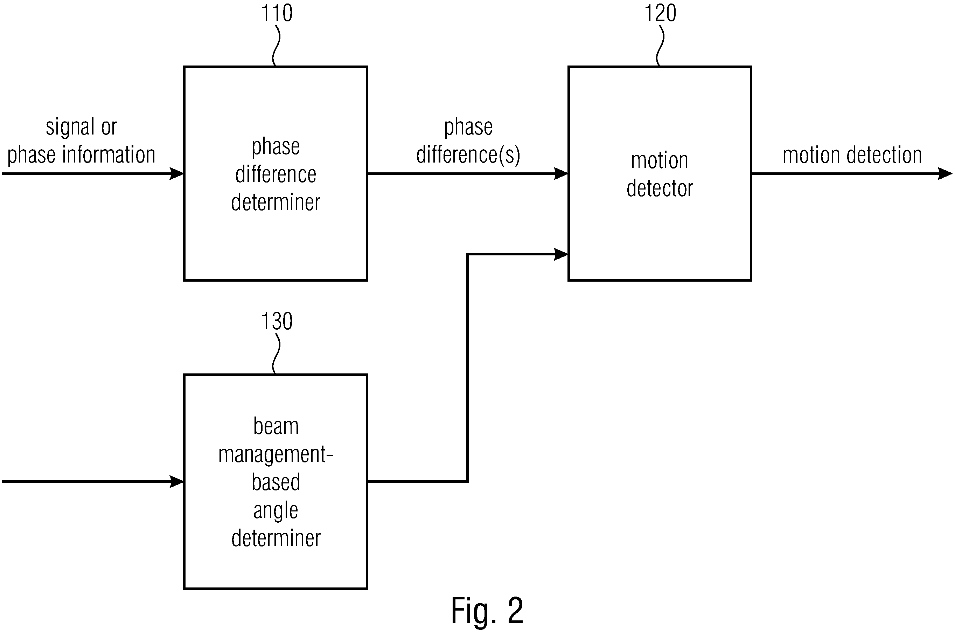

Fig. 2 illustrates an apparatus for motion detection according to an embodiment, further comprising a beam-management based angle determiner 130. The beam-management based angle determiner 130 may, e.g., provide, for example, an azimuth angle and an elevation angle of a pencil beam of at least one of the transmitter and the receiver to the motion detector 120. The motion detector 120 is configured to detect the movement depending on the azimuth angle and the elevation angle of a pencil beam of at least one of the transmitter and the receiver. Thus, the azimuth and elevation angles of beam-management based angle determiner 130 may, e.g., employed as additional information or as an alternative to evaluate further connections.

According to an embodiment, each of the one or more signal connections may, e.g., be a connection between the transmitter and the receiver for transmitting the signal of the signal connection in a frequency band with a center frequency being greater than 24 GHz.

In an embodiment, the signal of each of the one or more signal connections may, e.g., be a channel state information-reference signal or may, e.g., be a synchronization signal or may, e.g., be a positioning reference signal or may, e.g., be another communication signal of the cellular network. Any available communication signal can work/can be used as of current standards. There are however different characteristics (pros/cons) regarding sampling rate adaptability, bandwidth adaptability and UE-specific adaptability, which may, e.g., be taken into account for use case dependent performance requirements. In some embodiments, several such signals may, e.g., be employed, for example, to obtain a higher sampling rate.

In an embodiment, the motion detector 120 may, e.g., be configured to estimate a movement depending on the phase difference of each of the one or more signal connections (and, for example, depending on the azimuth angle and the elevation angle of a pencil beam of at least one of the transmitter and the receiver) by determining movement change information for each coordinate of a one-dimensional coordinate system or of a two-dimensional coordinate system or of a three-dimensional coordinate system. In particular embodiments, at least one azimuth- and elevation angles tuples may, e.g., be employed to transform detected scalar movement to a Cartesian coordinate system.

According to an embodiment, the phase difference determiner 110 may, e.g., be configured to determine a phase difference for each of three or more signal connections (in such an embodiment, the one or more signal connections mentioned before are in fact three or more signal connections). The motion detector 120 may, e.g., be configured to detect a motion depending on the phase difference of each of the three or more signal connections. Each of the three or more signal connections may, e.g., be a connection between a transmitter of the one or more transmitters and a receiver of the one or more receivers for transmitting a signal of the signal connection from a directional antenna of one or more directional antennas of the transmitter to a directional antenna of one or more directional antennas of the receiver, such that the transmitted signal may, e.g., be emitted along a wave propagation path. The wave propagation path of each of the three or more signal connections may, e.g., be spatially separated from any other wave propagation path of the three or more signal connections.

According to an embodiment, the one or more user equipments may, e.g., be three or more user equipments. A first one of the three or more signal connections may, e.g., a connection between a base station of one or more base stations of the cellular network and a first user equipment of one or more user equipments of the cellular network. A second one of the three or more signal connections may, e.g., be a connection between said base station and a second user equipment of the one or more user equipments. A third one of the three or more signal connections may, e.g., be a connection between said base station and a third user equipment of the one or more user equipments. The three or more user equipments may, e.g., be attached in a fixed manner at an object that shall be motion detected, such that the three or more user equipments form a two-dimensional array or such that the three or more user equipments for a three-dimensional array.

In an embodiment, a first one of the three or more signal connections may, e.g., be a connection between a base station of the one or more base stations of the cellular network and a first antenna of three or more antennas of a user equipment of the one or more user equipments of the cellular network. A second one of the three or more signal connections may, e.g., be a connection between said base station and a second antenna of the three or more antennas. A third one of the three or more signal connections may, e.g., be a connection between said base station and a third antenna of the three or more antennas. The user equipment may, e.g., be attached in a fixed manner at an object that shall be motion detected. The three or more antennas may, e.g., form a two-dimensional antenna array, or the three or more antennas may, e.g., form a three-dimensional antenna array.

According to an embodiment, the three or more user equipments may, e.g., be attached in a fixed manner to an object of an infrastructure. Or, the user equipment comprising the three or more antennas may, e.g., be attached in a fixed manner to the object of the infrastructure. The motion detector 120 may, e.g., be configured to conduct infrastructure monitoring by detecting a movement of the object of the infrastructure.

In an embodiment, the three or more user equipments may, e.g., be attached in a fixed manner to a building. Or, the user equipment comprising the three or more antennas may, e.g., be attached in a fixed manner to the building. The motion detector 120 may, e.g., be configured to conduct vibration and/or subsidence monitoring by detecting a movement of the building.

According to an embodiment, a user equipment is provided, wherein the user equipment may, e.g., comprise the apparatus of Fig. 1.

In an embodiment, a base station is provided, wherein the base station may, e.g., comprise the apparatus of Fig. 1.

According to an alternative implementation of Fig. 1, an apparatus for motion detection according to another embodiment is provided.

The apparatus comprises a phase difference determiner 110 configured for determining a phase difference of signal reflections of a signal.

Moreover, the apparatus comprises a motion detector 120 configured for detecting a movement depending on the phase difference of the signal reflections of the signal.

The phase difference is a difference between a first signal reflection of the signal reflections of the signal that has been caused by a first reflection of the signal being transmitted at a first point in time by a transmitter of a cellular network and a second signal reflection of the signal reflections of the signal that has been caused by a second reflection of the signal being transmitted at a different second point in time by the transmitter of the cellular network.

The transmitter, which transmits the signal to a receiver of the cellular network, is an entity of the cellular network, for example, a base station or, for example, a user equipment of the cellular network.

According to an embodiment, the transmitter may, e.g., comprise the apparatus of such an alternative implementation of Fig. 1.

In such an embodiment, the transmitter, may, e.g., also comprise receiving capabilities and may, e.g., thus be a (first) transceiver. Analogously, the receiver, may, e.g., also comprise transmitting capabilities and may, e.g., thus be a (second) transceiver.

In the following, particular embodiments are described in more detail.

At first, applications and a system architecture for mmWave based applications, for example, for 5G, are provided.

Now, mmWave compatible sensing applications are described. At first, some background considerations are outlined.

5G NR (rel.-15/16) supports mmWave communications particularly by means of frequency range 2 (FR2) and beam management. Nowadays it is indeed possible to connect semistationary mmWave users to a network, but mmWave hardware and beam management are not yet mature enough to operate robustly throughout mobility. Consequently, preferred embodiments employ one or more stationary base stations (BSs) and one or more UE nodes and an acquired link, for example, used for transmitting channel state information (CSI). Ambient mobility will impact the link, and this can be used to acquire context information, for example, by means of radio-fingerprints as shown in [26] at sub-6 GHz frequencies. In general, mmWave links are more prone to interrupts.

In an embodiment, small-scale mobility scenarios may, for example, relate to an outdoor scenario, in which a mmWave UE is mounted on the exterior surface of the structure to be monitored, for example on the facade of a skyscraper. In an embodiment, a line-of-sight (LOS) path to the BS is established, such that neither pedestrians nor vehicles are expected to interrupt the link. Alternatively, or additionally, specific non-line-of-sight (NLOS) paths like ground or building reflections may, e.g., also be employed.

With this setup the infrastructure is monitored for certain events, for example in the context of the discussed skyscraper setup, earthquakes and strong wind will particularly introduce small-scale mobility on UE side as it is mounted at high altitude compared to the mmWave BS which is typically near street level.

In another embodiment, the described system may also be applied in subsidence scenarios and may, e.g., enable tracking of all kinds of movements.

Now, some background considerations with respect to characteristics of seismicity, wind and weather, and subsidence are presented.

With respect to seismic ground motion, it should be noted that human activities and natural events alter the stresses and strains in the earth's crust, eventually leading to the release of seismic waves traveling through the earth or along the earth surface (body/surface waves). Body waves can be subdivided into primary and secondary waves, both traveling at speeds of several 1,000 m/s, where P-waves travel quicker and with less energy; surface waves have a much lower velocity. In addition, any motion at the surface generates waves traveling in the subsurface, e.g., atmospheric pressure fluctuations and scattering of ocean waves (see [27]). Reported frequencies are typically in the range of 0.05 Hz to 1 kHz, where higher frequency signals are often generated by anthropogenic sources, and local earthquakes are detected in the range of 0.5-20 Hz. Surface waves from distant earthquakes can have periods of tens of seconds (see [28], [29]).

Regarding wind and weather, in [30], a horizontal movement of a skyscraper in the range of about 30mm was detected at an altitude of about 200 m. The key wind-induced oscillation frequencies were 0.48 Hz and 0.60 Hz at weak wind with velocity of about 5-9 m/s. Particularly during strong storms, it is essential to track such movement to assess and predict the risk of structural instability in real-time.

Regarding subsidence, for example, mining regions around the world suffer from subsidence, e.g., a sudden sinking or gradual downward settling of the ground with little to no horizontal motion. This also occurs where petroleum, gas or groundwater is extracted. There are also natural reasons for for subsidence, e.g., erosion and earthquakes, which lead to the formation of cracks in infrastructure accompanied by structural damages. Typical values for gradual settling are within a couple of millimeters per year, e.g., 2.1-3.4 mm/year (see [31]).

Now, as a further background consideration, an impact of the introduced events on a channel is described. The channel may, e.g., be a mmWave link.

For wireless channels, so far, analysis of Free Space Optics (FSO) (see [32]) and sub-6 GHz links (see [33]) provide conflicting results on the applicability of received signal strength (RSS) measurements for earthquake detection. The considered frequencies, however, exhibit significantly different propagation characteristics than at mmWaves. Beam misalignments (see [34]) showed that the RSS may degrade significantly, however, in practical case, they may still have a significant impact.

For wired channels, in the area of fiber optic communications, [28] describes that ground motion can be detected and analyzed resolving the phase of backscattered photons along the optical fiber by using high precision equipment not applicable to wireless communications.

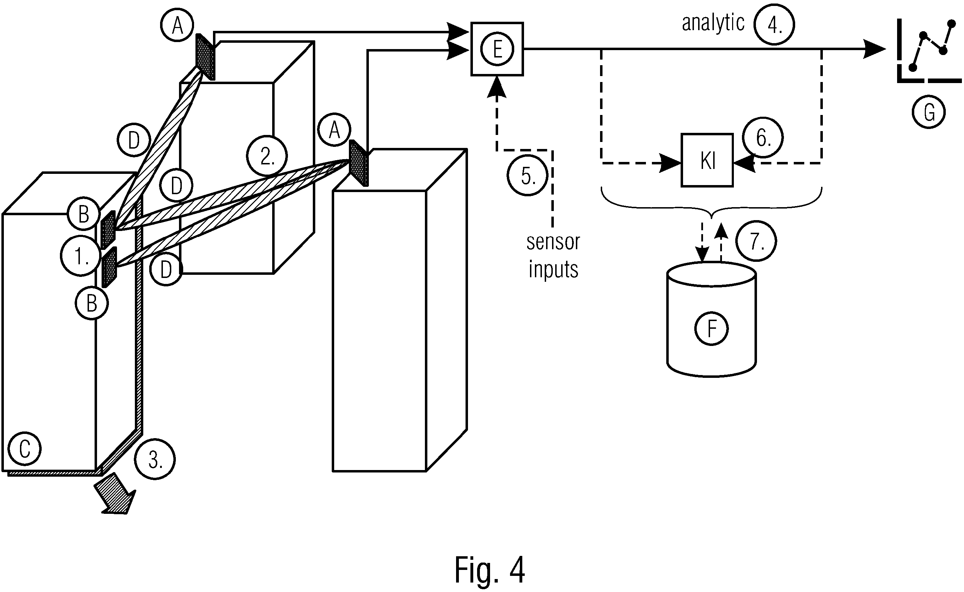

Fig. 4 illustrates an application example according to an embodiment, wherein:

A illustrates electronically steerable antennas of a base station;
B illustrates electronically steerable antennas of a user equipment;
C illustrates an infrastructure that shall be surveilled, for example, a building;
D illustrates separated mmWave wireless connections;
E illustrates a data collection point with limited computational resources;
F illustrates Mobile Edge Computing computational resources of the network; and
G illustrates a reconstruction of a 3D movement and velocity.

According to embodiments, some or all of the following steps may, e.g., be conducted:

1. Installation of commercial mmWave UEs (B) in a free field environment and/or at a facade of a building (C) with a total of at least three separated mmWave wireless connections (D) to a base station (A).

2. Continuous signaling via the wireless connections (D) and continuous alignment of UE and BS pencil beams. Complex valued data vectors comprising azimuth and elevation angles may, e.g., be determined at base station (A) and/or at user equipment (B) sides.

3. A relative position change of the object (infrastructure) (C) affects the data determined in step 2. The complex valued data vectors with the angle information for points-in-time (i) *before*, (ii) *during* and (iii) *after* step (3.) are forwarded to data collection point (E).

4. An analytic reconstruction of 3D movement and velocity is conducted using measurement data for different, separated propagation paths.

5. In specific embodiments, sensor fusion may, e.g., be conducted, wherein internal sensor measurement data of mmWave UEs (B) is provided and taken into account, such as data from an accelerator measurement device, from a gyroscope or from a satellite navigation device.

6. According to specific embodiments, AI concepts for data extrapolation may, e.g., be employed, wherein these AI concepts may, e.g., continuously be trained.

7. In specific embodiments, network internal, powerful computational resources (F) may, e.g., be employed to conduct step (4) and/or step (6).

The application example of Fig. 4 may, e.g., be used to implement a secondary usage of a Fixed Wireless Access (FWA) broadband access. Fig. 4, steps 1 to 4 using system components A, B, C, D and G realizes said secondary usage.

Additionally, the modular system architecture of Fig. 4 may, e.g., take internal sensor data into account for reconstructing a 3D movement, for example, an accelerometer, a gyroscope and/or satellite navigation data, because such data is usually used, and such sensors are usually available in modules of conventional smart phones.

In the following, a system architecture according to embodiments is described.

Particular embodiments realize that respective sensors better assess the previously discussed events. Further, the provided concepts according to embodiments can also be used to raise alarms such that people in risk can evacuate and prepare for the disaster event, or be rescued more easily.

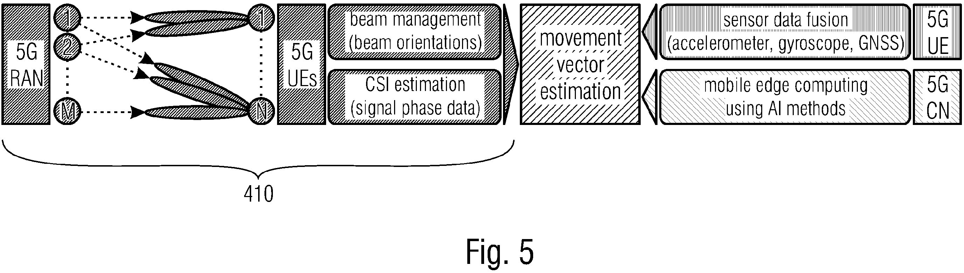

Fig. 5 illustrates a millimeter wave sensing system according to an embodiment. The system may, for example, be implemented as a 5G sensing system.

In particular, movement estimation based on function blocks 410 is described. The provided mmWave measurement technique described below may, e.g., be employed in a sensing system according to Fig. 5.

In some embodiments, comfortably usable, easy-to-install measurement platforms may, e.g., be embedded, for example, into existing 5G networks, and thus allow for seamless connectivity.

Novel radio interferometry concepts for structural dynamic studies allow for detection of small strains and deformations from afar using two specifically arranged antennas. Some embodiments adapt this concept to cellular networks.

Classical measurement techniques use various devices, such as inertial sensors, strain meters or gyroscopes (see [29]), and these devices may also be comprised or used by platforms according to embodiments, as COTS 5G devices have similar in-build sensors. Another classical technique is global navigation satellite system (GNSS)-based sensing. However, such a sensing technique is easily obstructed (see [35]).

Regarding mmWave frequencies and mmWave enabled smartphones, in recent years, there has been an increasing demand for integration and usage of monitoring systems from small to big scales. However, integration and usage of monitoring systems require expensive equipment and professional staff, leading to less application in medium to small-sized and funded processes.

For example, the analysis of seismic signals historically relied on the detection of specific events at different stations for source localization and analysis of subsurface rock formation properties. In the past two decades, however, it has been shown that diffuse waves traveling in all directions can produce a point source in the medium which can be used to study the subsurface medium (see [27]). In urban environments, however, waves typically have a directionality depending on prominent noise sources such as trains. Using mobile phones for localization of such noise sources can help to transform formerly unspecified noise from anthropogenic activities to distinct sources of seismic energy. This becomes a feasible option as 5G mmWave UEs are set to be ubiquitously available, thus enabling dense and broad deployment of sensors and becoming part of future smart cities.

With respect to AI applications, the provided concepts according to embodiments may, e.g., be based on a monitoring system which provides large datasets of complex variables from different sensors and platforms compared to conventional methods. This results in complexities difficult to solve by standard numerical techniques alone.

The use of AI concepts such as deep learning, and/or physics-informed machine learning (ML) models, and/or neural networks may, e.g., be employed in embodiments of the present invention to enable an impact on analyzing the obtained data.

Embedding the motion measuring concepts of embodiments into a cellular network, for example, into a 5G network, enables fast and efficient computation, for example, within a mobile edge cloud of an operator.

According to an embodiment, the goal of identifying a state and an actual behavior of a studied structure may, for example, be reached sustainably, and further allows for better-informed decisions and precautions.

In the following, mmWave measurement concepts according to some embodiments are described.

According to embodiments, concepts are provided, which enable fine monitoring and tracking of small-scale mobility over any period of time.

In embodiments, the signal phase information, e.g., comprised within a channel estimate vector $\hat{H}(f)$ for time instances $t$ may, e.g., be employed, which is available at $N$ different orthogonal frequency-division multiplex (OFDM) subcarriers

$$f = f_0 + n \cdot \Delta f, \, n = 0, 1, \ldots, N - 1, \text{ for example, of 5G NR } (N \ll 3{,}300),$$

for example, of 5G NR ($N \ll 3{,}300$),

where $f_0$ is the mmWave carrier and $\Delta f$ depends on numerology and, e.g., on a CSI Reference Signal (CSI-RS) density in a frequency domain (see [36]). Other signals, for example, other 5G NR signals, could be employed in addition to or alternatively to CSI-RS, for example, synchronization signals (SSs) or rel.-16 positioning reference signals (PRSs).

In the following, it may, e.g., be assumed that $\hat{H}(f)$ is acquired at a rate suiting the use case/the application, e.g., in the range of kHz for earthquakes to minute intervals for subsidence. Moreover, it may, e.g., be assumed to use a bandwidth $N \cdot \Delta f$ sufficient for a movement monitoring with predetermined accuracy of the use case.

In particular, for example, CSI-RS may, e.g., be configured periodically (every $M^{th}$ slot with $M \in [4, 640]$, enabling velocity estimation) or aperiodic (on demand). Considering the minimal FR2 slot length of 125 $\mu$s, sampling rates up to 2 kHz are supported (see [36]). Moreover, it is noted that with respect to CSI-RS, CSI-RS may cover only fractions of the carrier bandwidth part (BWP) (see [36]).

Once the UE moves, the signal phases change from measurement $\hat{H}_{ref}(f)$ at $t = t_0$ to $\hat{H}_{shift}(f)$ at $t = t_1 > t_0$, hence

$$\delta(f) = \measuredangle \hat{H}_{\text{shift}}(f) - \measuredangle \hat{H}_{\text{ref}}(f), \, \delta \in (-180, 180]^\circ. \tag{1}$$

After unwrapping phase differences $\delta(f)$ over vector $f$, the movement can be estimated at each subcarrier individually by

$$d(f) = \frac{\delta_{\text{unwrapped}}(f)}{180°} \cdot \frac{c_0}{f}, \tag{2}$$

where $c_0$ stands for the speed of light. Finally, a scalar estimate of the relative movement between the two sensor locations is derived from vector $d(f)$ using $\hat{d} = mean(d(f))$ or a more sophisticated estimator, e.g., using other channel state information or network provided parameters for decision making. It is noted that $\hat{d}$ could be determined in the time domain using the phase of the strongest channel impulse response (CIR) tab, which mitigates the estimation error in $\hat{d}$ due to multipath, but time resolution will be crucial.

However, estimate $\hat{d}$ only corresponds to the movement along the axis of the incident electromagnetic (EM) wave. As illustrated in [30], the corresponding movement in Cartesian coordinates can be recovered, if the angle of the incident wave is known. For example, 5G NR mmWave transceivers can determine these on their own based on their beamsteering capability, either from beam training or from later refinement, e.g., using SSs, CSI-RSs or PRSs. Or, classical angle finding algorithms, e.g., MUSIC, may alternatively or additionally be employed.

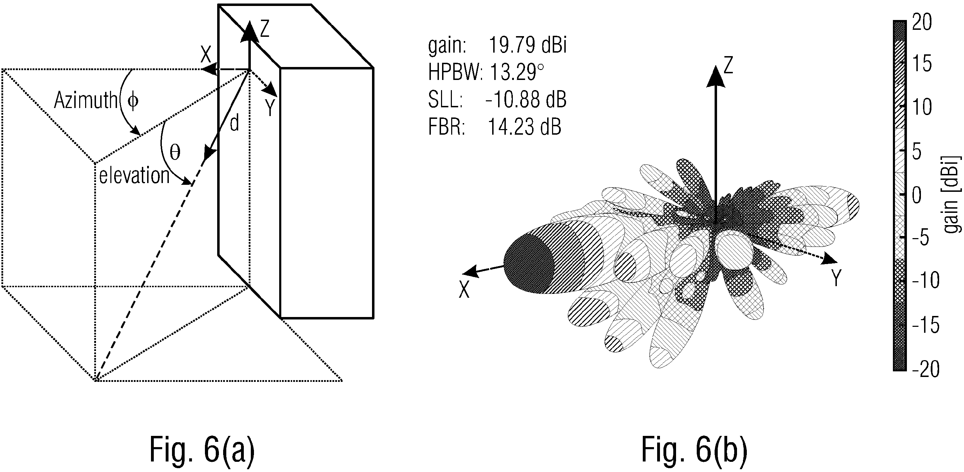

Fig. 6 illustrates a setup, wherein Fig. 6(a) illustrates a setup of a wall-mounted UE aligning a pencil beam to incident mmWaves (in Fig. 6(a): pos. $\phi$, neg. $\theta$), and wherein Fig. 6(b) illustrates a simulated pencil beam pattern with $(\phi, \theta) = (0, 0)°$. ($\theta$ is defined positively from x-y-plane towards z-axis, and therefore, $\theta$ is negative, if an antenna points towards ground as in Fig. 6(a).)

Considering the azimuth angle $\phi \in (-180, 180]°$ and elevation angle $\theta \in [-90, 90]°$, illustrated, e.g., in Fig. 6(a), the UE recovers the movement as follows (extending [30]):

$$\left(\widehat{\Delta x}, \widehat{\Delta y}, \widehat{\Delta z}\right)^T = \hat{d} \cdot \left(\frac{\cos(\phi)}{\cos(\theta)}, \frac{\sin(\phi)}{\cos(\theta)}, \frac{1}{\sin(\theta)}\right)^T. \tag{3}$$

This estimate, however, couples the components and might therefore suffer from errors. Nonetheless, this system is suited to detect an initial movement $\hat{d}$ with a single UE and is moreover able to provide an initial estimate of its (x, y, z) components.

To improve Sensing Performance, in some embodiments, for example, upon confirmation of an initial movement event, fine-grained 3D tracking of the movement with better accuracy might be desired to assess the movement over time.

For this purpose, in an embodiment, the data of the previous process (up to Equation 3) could be, e.g., fused with accelerometer and/or gyroscope sensor data and/or satellite positioning data.

In another embodiment, several mmWave links may, e.g., be employed, for example, between a single UE and several BSs, or, for example, between several UEs and a serving BS, or, for example, between several BS among each other, or, for example, between several antennas in a single UE or in a single BS. Or, a reflection from a single entity to itself may, e.g., be employed.

Using several UEs has the advantage that it offers the customer flexibility in deployment.

If $U \geq 3$ is the overall number of deployed UEs, $\hat{d}_u$ for $u = 1, \ldots, U$ may, e.g., be measured along beam orientations

$$\vec{r_u} = \left(\cos(\theta_u)\cos(\phi_u), \cos(\theta_u)\sin(\phi_u), \sin(\theta_u)\right)^T. \tag{4}$$

Analogously to velocity vector estimation from radial velocity measurements with several radars (see [37]), the movement vector is reconstructed in three steps. First, two mutually orthonormal vectors $\vec{o_{A,u}}$, $\vec{o_{B,u}}$ may, e.g., be determined for each $\vec{r_u}$ vector. Second, the equation system $\vec{b} = A \cdot \vec{c}$ describing the point of intersection of $U$ planes in space may, e.g., be set up with column vector $\vec{b}$ of length 3($U$-1) and matrix $A$ as follows (here: $U = 3$):

$$\vec{b} = \begin{pmatrix} \hat{d}_2 \cdot \vec{r_2} - \hat{d}_1 \cdot \vec{r_1} \\ \hat{d}_3 \cdot \vec{r_3} - \hat{d}_1 \cdot \vec{r_1} \end{pmatrix} \tag{5}$$

$$A = \begin{pmatrix} \overrightarrow{o_{A,1}}, & \overrightarrow{o_{B,1}}, & -\overrightarrow{o_{A,2}}, & -\overrightarrow{o_{B,2}}, & 0_{3x1}, & 0_{3x1} \\ \overrightarrow{o_{A,1}}, & \overrightarrow{o_{B,1}}, & 0_{3x1}, & 0_{3x1}, & -\overrightarrow{o_{A,3}}, & -\overrightarrow{o_{B,3}} \end{pmatrix} \quad (6)$$

After determining column vector $\vec{c}$ of length $2U$ using the inverse of $A$ (pseudo-inverse $(A^TA)^{-1}A^T$ finds the least squares solution if $U > 3$), the small-scale movement may, e.g., be reconstructed at last using tuples of its coefficients $\check{c}_i$, $i = 1, \ldots, 2U$:

$$\left( \widehat{\Delta x_u}, \ \widehat{\Delta y_u}, \ \widehat{\Delta z_u} \right)^T = \widehat{d_u} \cdot \overrightarrow{r_u} + \widehat{c}_{2u-1} \cdot \overrightarrow{o_{A,u}} + \widehat{c}_{2u} \cdot \overrightarrow{o_{B,u}}. \quad (7)$$

Considering system scalability, the final $\widehat{\Delta x}$, $\widehat{\Delta y}$ and $\widehat{\Delta z}$ values may, e.g., be determined using the mean of all $U$ outcomes of equation 7.

In the following, further particular embodiments are provided, and a methodology to evaluate the concepts according to embodiments is described.

At first, ray-tracing for a CSI-RS configuration and antenna setup is described. In particular, the raytracing simulation tool with regard to the CSI-RS configuration and mmWave antenna beam pattern.

An evaluation may, e.g., be based on 3D ray-tracing data from [38], which allows for modelling of mmWave channels considering fine-grained, parametrized movements using the shooting and bouncing ray (SBR+) solver. The 5G network operates in FR2 band n257 at $f_0$ = 26.5 GHz leveraging 400MHz of bandwidth. Considering both CSI-RS density of 1 and 60 kHz numerology, the ray-tracer calculates $N$ = 555 channel samples with $\Delta f$ = 720 kHz spacing. Such a setup neglects guard bands and requires carrier aggregation. Using [39], an 8×8 uniform planar array (UPA) may, e.g., be arranged, comprising 64 patch antennas at half-wavelength spacing. The boresight beam pattern of Fig. 6(b) may, e.g., be provided along with the following key parameters: maximum antenna gain, half-power bandwidth (HPBW), sidelobe level (SLL) and front-to-back ratio (FBR).

For example, the following two scenarios may, e.g., be considered as use cases:

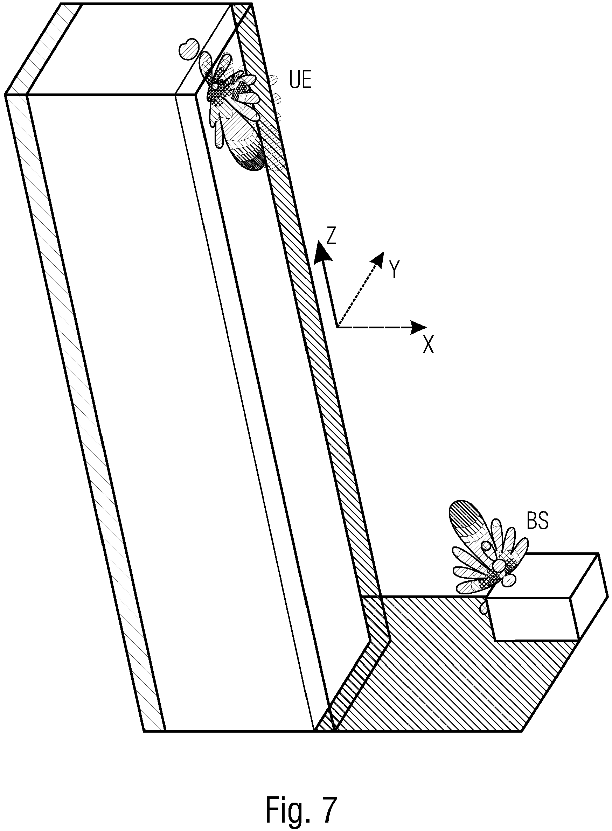

In a first scenario according to an embodiment, illustrated by Fig. 7, a scenario for infrastructure monitoring, for example, for monitoring a skyscraper, is presented. In particular, Fig. 7 illustrates an urban scenario with induced movement (shaded) along a positive x-axis of skyscraper-mounted UE, wherein the movement, may, for example, be caused by wind or seismicity.

In the embodiment of Fig. 7, the mmWave BS may, for example, be mounted near a pedestrian level (height: 10 m) on the outside of a building (for example, of the size 20 m × 20 m × 12 m) whereas the UE may, for example, be mounted higher up on a facade of the infrastructure, for example, a skyscraper (for example, of the size 40 m × 40 m ×170 m), for example 150 m higher up. The horizontal spacing of the sites may, for example, be 30m along x- and y-axes, respectively. Considering this setup, the beams may, e.g., aligned optimally, for example, with ($\phi$, $\theta$) = (45.0, -78.7)° (UE side). The simulated small-scale movements of skyscraper and UE may, e.g., along the x-axis with an $x_{shift}$ = 0, 1, ..., 5 mm.

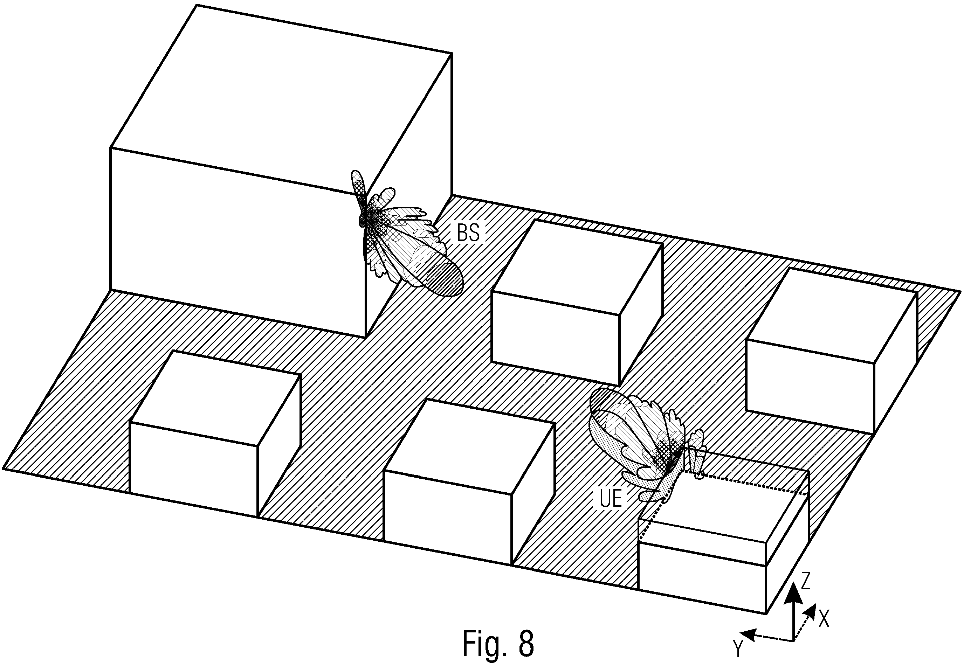

In a second scenario according to another embodiment, illustrated by Fig. 8, a scenario for subsidence monitoring is presented. In particular, Fig. 8 illustrates a suburban scenario exhibiting subsidence (shaded) along a negative z-axis of a UE.

In the embodiment of Fig. 8, subsidence affecting a suburban house is considered. The mounted UE along the z-axis exhibits a $z_{shift}$ = 0, -1, . . . , -5mm. The BS may, e.g., be mounted at a height of, for example, 10 m, e.g., on the outside of a building, for example, a community center (for example, of the size 20 m × 20 m × 12 m), whereas the UE is mounted, for example, at 4 m altitude on the facade of the customer's house (for example, of the size 10 m × 10 m × 6 m). The horizontal separation of the devices may, for example, be 15 m and 30 m along x- and y-axes, respectively. For this setup, optimal beam alignment may, e.g., be achieved, for example, by ($\phi$, $\theta$) = (63.4, 10.1)° on UE side.

In the following, a deployment of multiple UEs according to embodiments is described.

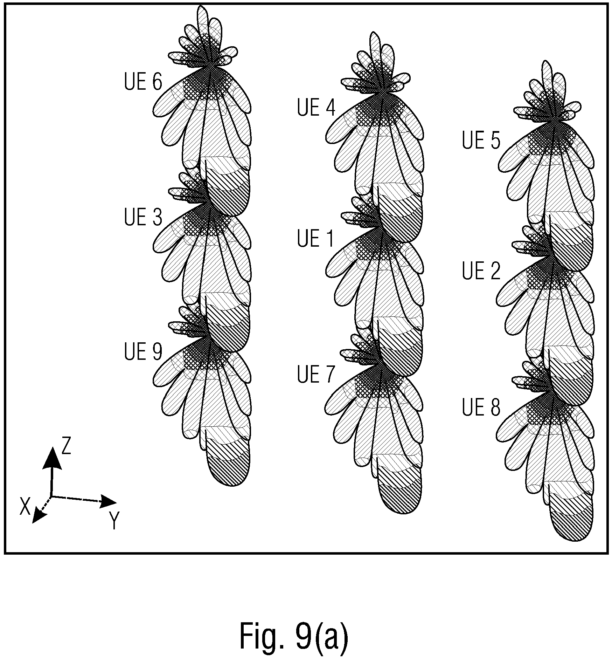

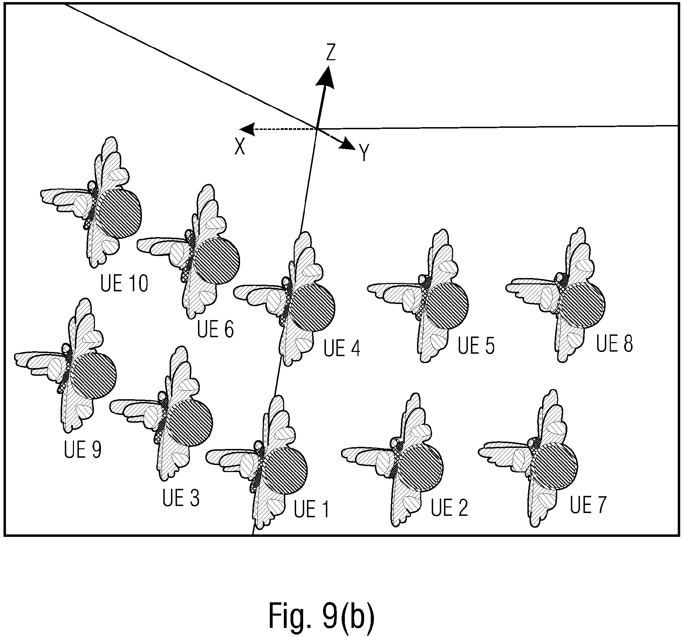

Fig. 9 illustrates multiple UE deployments, wherein Fig. 9(a) illustrates multi-UE deployments with 9 UEs for the infrastructure scenario of Fig. 7, and wherein Fig. 9(b) illustrates multi-UE deployments with 10 UEs for the subsidence scenario of Fig. 8.

In simulation and evaluation, for example, deployments of up to 10 UEs with, e.g., ideally aligned beams as shown in Fig. 9 may, e.g., be employed. The additional UEs are mounted next to reference UE 1 following the illustrated axes in steps of 1 m. For evaluation purposes, multi-UE deployments using $\geq$ 3 UEs may, for example be considered. For evaluation, a selection of deployment constellations may be conducted that minimize the condition number (CN) $||A^{-1}||_2 \bullet ||A||_2$ of matrix $A$ for a given $U$ based on its relative error (RE) limiting characteristic described in [40].

In the following, an evaluation of embodiments of the present invention is presented.

At first, the employed evaluation metrics are presented.

In the following, several movement vector estimates $\overrightarrow{m_{meas}} = \left(\widehat{\Delta x}, \widehat{\Delta y}, \widehat{\Delta z}\right)$ component-wise to the true movement $\overrightarrow{m_{move}} = (x_{shift}, 0,0)$ or $\overrightarrow{m_{move}} = (0,0,z_{shift})$, respectively, for increasing absolute shift for a specific UE constellation. This comparison uses the results of single UE 1 on the one hand, and of $U$ = 3, 4, 6 and 9 UE deployments on the other hand. Moreover, the relative error (RE) $||\overrightarrow{m_{meas}} - \overrightarrow{m_{move}}||_2/ ||\overrightarrow{m_{move}}||_2$ is investigated. The incurred REs of UE 1 is compared by itself as well as for multi-UE deployments using $U$ = 3, . . . , 9 UEs at once.

Furthermore, to investigate performance distribution, the mean relative error of any UE constellation over $x_{shift}$ and $z_{shift}$, respectively, is investigated. Using the mean REs of all constellations, the empirical cumulative distribution function (ECDF) of mean RE and compare the ECDFs for $U$ = 3, . . . , 9 is derived.

In the following, an evaluation of a skyscraper scenario is provided.

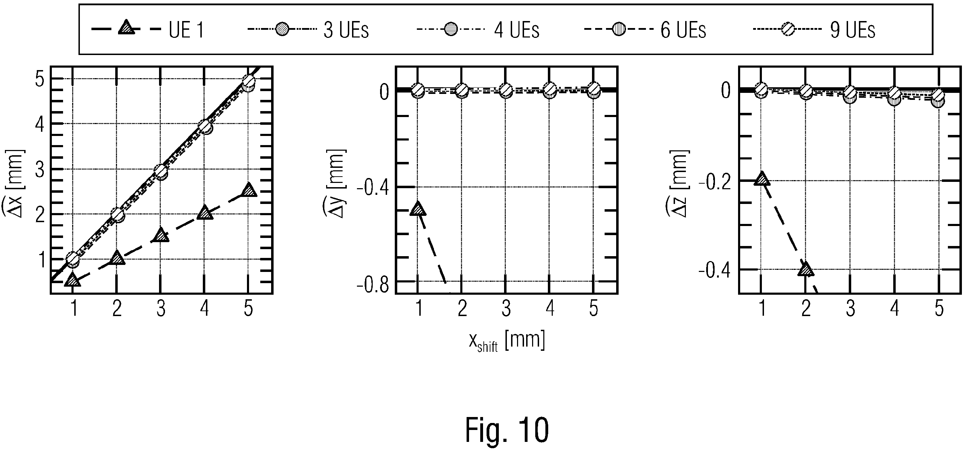

Fig. 10 illustrates a comparison between a measured movement and a true movement of a skyscraper scenario according to an embodiment. In particular, Fig. 10 compares the estimates of the multi-UE setups with minimal CN to the ones of reference UE 1. It can be seen that the multi-UE measurements approach the ideal performance, although there is still a discernible error, cf. $\widehat{\Delta z}$ over $x_{shift}$. However, compared to the single UE setup, the error for all movement components has been reduced.

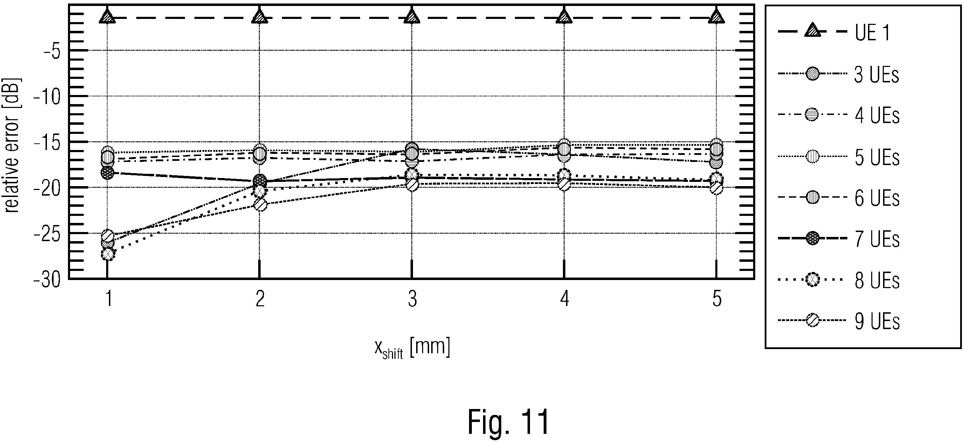

This can further be seen in Fig. 11, wherein Fig. 11 illustrates a relative error of the movement measurement of the skyscraper scenario according to an embodiment.

In particular, Fig. 11 illustrates the incurred REs which have been reduced by at least 14.3 dB. With RE < -15 dB in all cases, accuracy is better than 32 $\mu$m; sometimes even better than 10 $\mu$m (RE < -20 dB), likely depending on multipath.

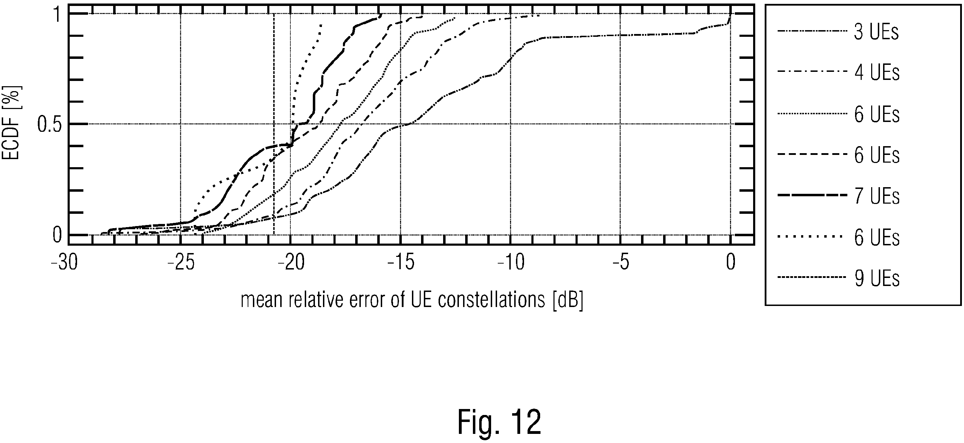

Fig. 12 illustrates a distribution of a mean relative error in the skyscraper scenario according to an embodiment. From the distribution of mean RE over all possible multi-UE constellations for $U$ = 1, . . . , 9, it can be seen that the minimal CN constellations considered previously are not the best performing ones, however, still far from being the worst. Compared to Fig. 11 it can clearly be seen that increasing $U$ increases the likelihood for deploying an UE constellation with increased measurement accuracy such that it approaches 1 $\mu$m in the best case. It can also be seen that deployments of 3 UEs can perform very inaccurate; this is due to UE constellations for which matrix $A$ is ill-conditioned, here: 1-norm CN $\geq$ 10^12 (= 120 dB), forcing use of the pseudo-inverse.

In the following, an evaluation of a subsidence scenario is provided.

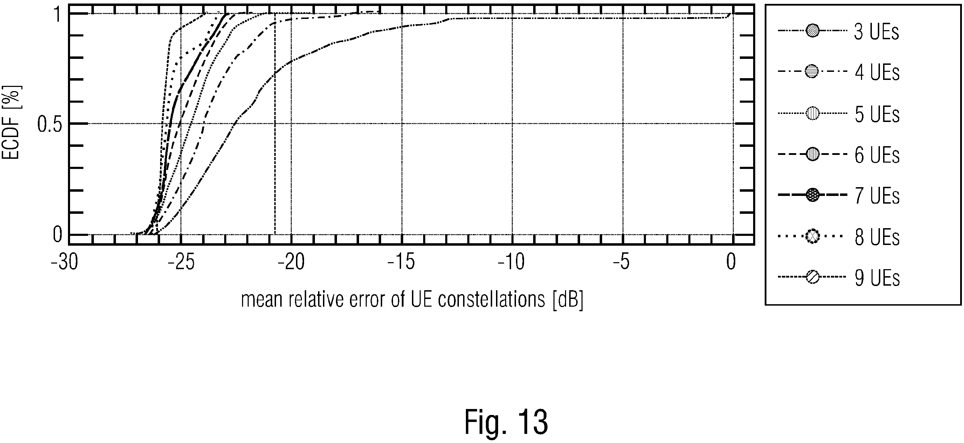

Fig. 13 illustrates a distribution of a mean relative error in a subsidence scenario according to an embodiment.

The results for this scenario are even better than for the skyscraper scenario. Fig. 13 illustrates an evaluation to the ECDF of mean RE. In this setup nearly all deployments with more than three UEs (96.2-100 %) offer sub-10 $\mu$m accuracy throughout $z_{shift}$, with some again approaching micrometer accuracy. This contrasts the mean RE of -7.5 dB for single UE 1. A reason for this performance enhancement could be the reduced scenario size translating to increased azimuth and elevation ranges being covered by the UEs, e.g., ($\Delta\phi$, $\Delta\theta$) = (4.4, 3.5)° > (1.9, 0.7)°, and thus providing more 3D movement information. However, the accuracy gain of adding UEs has shrinked as the ECDFs are overall spaced more tightly than in Fig. 10, thus making the placement of UEs a key optimization step before deployment, e.g., by using 3D environment maps. Further, when recalling the envisioned deployments of a single UE exploiting several propagation paths to one or more BSs, this shows that even with expected numbers of up to 4-5 distinct mmWave link opportunities per BS (see [34]), sensing accuracy might indeed be very good.

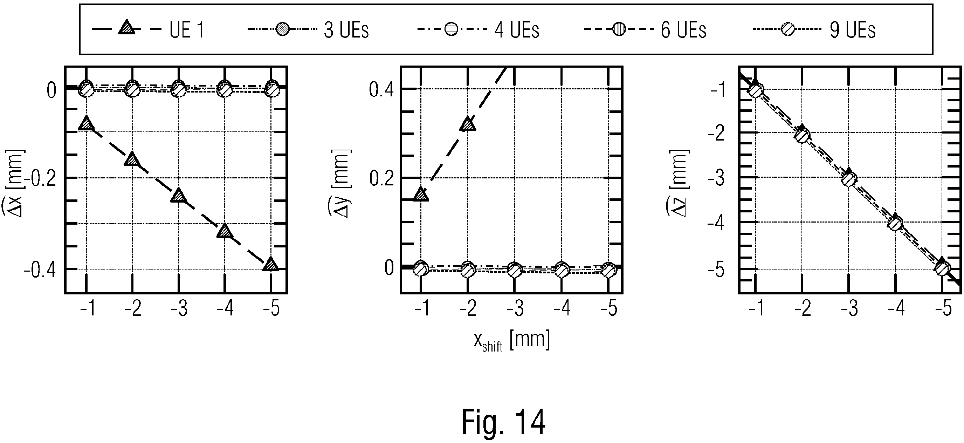

Fig. 14 illustrates a comparison between a measured movement and a true movement of the subsidence scenario according to an embodiment.

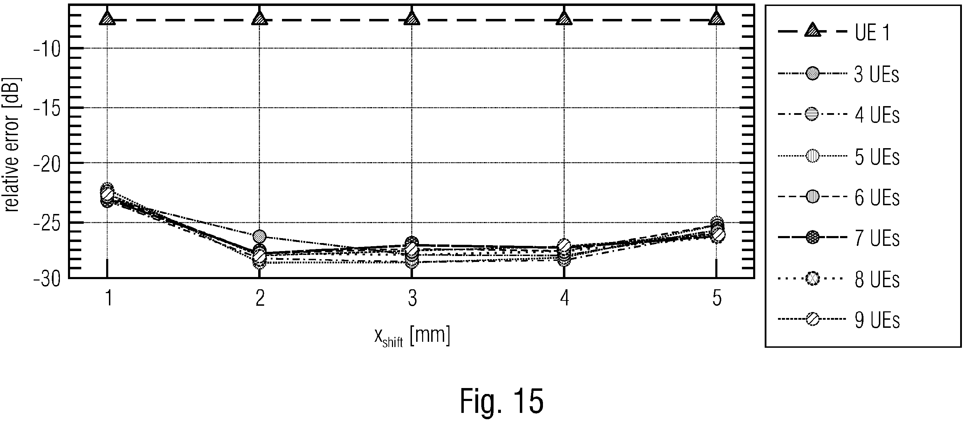

Fig. 15 illustrates a relative error of a movement measurement of the subsidence scenario according to an embodiment.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References:

[1] Chengkun Jiang, Junchen Guo, Yuan He, Meng Jin, Shuai Li, and Yunhao Liu. 2020. mmVib: micrometer-level vibration measurement with mmwave radar. In Proceedings of the 26th Annual International Conference on Mobile Computing and Networking (MobiCom '20). Association for Computing Machinery, New York, NY, USA, Article 45, 1-13. DOI: https://doi.org/10.1145/3372224.3419202.

[2] Chenhan Xu, Zhengxiong Li, Hanbin Zhang, Aditya Singh Rathore, Huining Li, Chen Song, Kun Wang, and Wenyao Xu. 2019. WaveEar: Exploring a mmWave-based Noise-resistant Speech Sensing for Voice-User Interface. In Proceedings of the 17th Annual International Conference on Mobile Systems, Applications, and Services (MobiSys '19). Association for Computing Machinery, New York, NY, USA, 14-26. DOI: https://doi.org/10.1145/3307334.3326073.

[3] Klaus Witrisal, Paul Meissner, Erik Leitinger, Yuan Shen, Carl Gustafson, Fredrik Tufvesson, Katsuyuki Haneda, Davide Dardari, Andreas F. Molisch, Andrea Conti, and Moe Z. Win, "High-Accuracy Localization for Assisted Living: 5G systems will turn multipath channels from foe to friend," in IEEE Signal Processing Magazine, vol. 33, no. 2, pp. 59-70, March 2016, doi: https://doi.org/10.1109/MSP.2015.2504328.

[4] X. Wang, C. Yang and S. Mao, "PhaseBeat: Exploiting CSI Phase Data for Vital Sign Monitoring with Commodity WiFi Devices," 2017 IEEE 37th International Conference on Distributed Computing Systems (ICDCS), 2017, pp. 1230-1239, doi: https://doi.org/10.1109/ICDCS.2017.206.

[5] Deepak Vasisht, Swarun Kumar, and Dina Katabi. 2016. Decimeter-level localization with a single WiFi access point. In Proceedings of the 13th Usenix Conference on Networked Systems Design and Implementation (NSDI'16). USENIX Association, USA, 165-178.

[6] Pedro Melgarejo, Xinyu Zhang, Parameswaran Ramanathan, and David Chu. 2014. Leveraging directional antenna capabilities for fine-grained gesture recognition. In Proceedings of the 2014 ACM International Joint Conference on Pervasive and Ubiquitous Computing (UbiComp '14). Association for Computing Machinery, New York, NY, USA, 541-551. DOI: https://doi.org/10.1145/2632048.2632095.

[7] A. Adhikari, A. Hetherington and S. Sur, "mmFlow: Facilitating At-Home Spirometry with 5G Smart Devices," 2021 18th Annual IEEE International Conference on Sensing, Communication, and Networking (SECON), 2021, pp. 1-9, doi: https://doi.org/10.1109/SECON52354.2021.9491616.

[8] Teng Wei, Shu Wang, Anfu Zhou, and Xinyu Zhang. 2015. Acoustic Eavesdropping through Wireless Vibrometry. In Proceedings of the 21st Annual International Conference on Mobile Computing and Networking (MobiCom '15). Association for Computing Machinery, New York, NY, USA, 130-141. DOI: https://doi.org/10.1145/2789168.2790119.

[9] M. Furuya, "SAR Interferometry," in Encyclopedia of Solid Earth Geophysics, H. K. Gupta, Ed. Cham: Springer Nature Switzerland AG, 2021, pp. 1335-1343.

[10] J. T. Freymueller, "GPS, Tectonic Geodesy," in Encyclopedia of Solid Earth Geophysics, H. K. Gupta, Ed. Dordrecht: Springer, 2011, pp. 119-137.

[11] A. Masoudi and T. P. Newson, "Contributed Review: Distributed optical fibre dynamic strain sensing," in Review of Scientific Instruments, vol. 87, no. 011501, 2016, doi: https://doi.org/10.1063/1.4939482.

[12] J. A. Zhang, F. Liu, C. Masouros, R. W. Heath Jr., Z. Feng, L. Zheng and A. Petropulu, "An Overview of Signal Processing Techniques for Joint Communication and Radar Sensing", in arXiv eess.SP e-prints, e-print 2102.12780, February 2021.

[13] K. Heimann, J. Tiemann, S. Böcker and C. Wietfeld, "Cross-Bearing based Positioning as a Feature of 5G Millimeter Wave Beam Alignment," 2020 IEEE 91st Vehicular Technology Conference (VTC2020-Spring), 2020, pp. 1-5, doi: https://doi.org/10.1109/VTC2020-Spring48590.2020.9129182.

[14] C. D. McGillem and T. S. Rappaport, "Infra-red location system for navigation of autonomous vehicles," Proceedings. 1988 IEEE International Conference on Robotics and Automation, 1988, pp. 1236-1238 vol.2, doi: 10.1109/ROBOT.1988.12230.

[15] T. S. Rappaport et al., "Millimeter Wave Mobile Communications for 5G Cellular: It Will Work!," in IEEE Access, vol. 1, pp. 335-349, 2013, doi: https://doi.org/10.1109/ACCESS.2013.2260813.

[16] X. Gao, L. Dai, S. Han, C.-L. I and R. W. Heath, "Energy-Efficient Hybrid Analog and Digital Precoding for MmWave MIMO Systems With Large Antenna Arrays," in IEEE Journal on Selected Areas in Communications, vol. 34, no. 4, pp. 998-1009, April 2016, doi: https://doi.org/10.1109/JSAC.2016.2549418.

[17] A. Bourdoux et al., "6G White Paper on Localization and Sensing," arXiv eess.SY e-prints, Jun. 2020.

[18] J. A. Zhang et al., "Perceptive mobile networks: Cellular networks with radio vision via joint communication and radar sensing," IEEE Vehicular Technology Magazine, Jun. 2021.

[19] A. Ali et al., "Leveraging sensing at the infrastructure for mmWave communication," IEEE Comm. Mag., vol. 58, no. 7, 2020.

[20] M. Alloulah and H. Huang, "Future millimeter-wave indoor systems: A blueprint for joint communication and sensing," Computer, vol. 52, no. 7, 2019.

[21] J. A. Zhang et al., "Multibeam for joint communication and radar sensing using steerable analog antenna arrays," IEEE Transactions on Vehicular Technology, vol. 68, no. 1, 2019.

[22] F. Liu et al., "Joint radar and communication design: Applications, state-of-the-art, and the road ahead," arXiv eess.SP e-prints, Jun. 2019.

[23] A. Bhutani et al., "The role of millimeter-waves in the distance measurement accuracy of a FMCW radar sensor," Sensors, vol. 19, no. 18, 2019.

[24] Y. Wang et al., "28 GHz 5G-based phased-arrays for UAV detection and automotive traffic-monitoring radars," in 2018 IEEE/MTT-S International Microwave Symposium, 2018.

[25] J. Hasch et al., "Millimeter-wave technology for automotive radar sensors in the 77 GHz frequency band," IEEE Transactions on Microwave Theory and Techniques, vol. 60, no. 3, 2012.

[26] B. Sliwa, N. Piatkowski, and C.Wietfeld, "The channel as a traffic sensor: Vehicle detection and classification based on radio fingerprinting," IEEE Internet of Things Journal, vol. 7, no. 8, 2020.

[27] R. Snieder and K. Wapenaar, "Imaging with ambient noise," Physics Today, vol. 63, no. 9, 2010.

[28] P. Jousset, T. Reinsch, T. Ryberg, H. Blanck, A. Clarke, R. Aghayev, G. Hersir, J. Henninges, M. Weber, and C. Krawczyk, "Dynamic strain determination using fibre-optic cables allows imaging of seismological and structural features," Nature Communications, vol. 9, no. 2509, 2018.

[29] D. C. Agnew, "Seismic instrumentation," in Encyclopedia of Solid Earth Geophysics, H. K. Gupta, Ed. Cham: Springer International Publishing, 2021, pp. 1419-1425.

[30] M. Talich, "Monitoring of horizonal movements of high-rise buildings and tower transmitters by means of ground-based interferometric radar," The International Archives of the Photogrammetry, Remote Sensing and Spatial Information Sciences, vol. XLII-3/W4, 2018.

[31] P.-Y. Declercq et al., "Long-term subsidence monitoring of the Alluvial plain of the Scheldt river in Antwerp (Belgium) using radar interferometry," Remote Sensing, vol. 13, no. 6, 2021.

[32] M. Matsumoto et al., "Innovative tracking system for next generation FSO systems under massive earthquakes," in 2015 International Conference on Optical Network Design and Modeling, 2015.

[33] J. Nachtigall et al., "The challenges of using wireless mesh networks for earthquake early warning systems," in 2009 Second International Conference on Advances in Mesh Networks, 2009.

[34] L. Grannemann et al., "Urban outdoor measurement study of phased antenna array impact on millimeter-wave link opportunities and beam misalignment," IEEE Trans. on Wireless Comm., vol. 20, no. 3, 2021.

[35] N. Houlié et al., "New approach to detect seismic surface waves in 1Hzsampled GPS time series," Scientific Reports, vol. 1, p. 44, 07 2011.

[36] E. Dahlman, S. Parkvall, and J. Skold, 5G NR: The Next Generation Wireless Access Technology, 1st ed. USA: Academic Press, Inc., 2018.

[37] B. Nuss, Y. L. Sit, and T. Zwick, "3D radar image fusion using OFDM-based MIMO radar," in 2016 German Microwave Conf. (GeMiC), 2016.

[38] Ansys Inc., "Ansys HFSS SBR+," available: https://www.ansys.com/content/dam/ resource-center/application-brief/ansys-sbr-plus.pdf/ [last visited: September 29, 2021].

[39] Ansys Inc., "Ansys HFSS for Antenna Simulation," available: https://www.ansys.com/content/dam/product/electronics/hfss/ab-ansyshfss-for-antenna-simulation.pdf [last visited: September 29, 2021].

[40] C. Moler, "What is the condition number of a matrix?" available: https://blogs.mathworks.com/cleve/2017/07/17/what-is-the-condition-number-of-a-matrix/ [Last visited: September 29, 2021].

**Claims**

1. An apparatus for motion detection, wherein the apparatus comprises:

   a phase difference determiner (110) configured for determining a phase difference for each of one or more signal connections between a transmitter and a receiver of a cellular network, and
   a motion detector (120) configured for detecting a movement depending on the phase difference of each of the one or more signal connections,
   wherein each of the one or more signal connections is a connection between the transmitter and the receiver for transmitting a signal of the signal connection from the transmitter to the receiver within the cellular network,
   wherein the signal is a signal used for transmitting control data used for controlling user data communication within the cellular network, or is a signal used for supporting user data communication within the cellular network,
   wherein the phase difference for each of the one or more signal connections indicates a difference between a first phase value of the signal of the signal connection received at the receiver of the signal connection at a first point-in-time and a second phase value of the signal of the signal connection received at the receiver of the signal connection at a different second point-in-time.

2. An apparatus according to claim 1,
   wherein, for each of the one or more signal connections,

   the transmitter of the signal connection is a base station of the cellular network, and the receiver of the signal connection is a user equipment of the cellular network; or
   the transmitter of the signal connection is a user equipment of the cellular network, and the receiver of the signal connection is a base station of the cellular network; or
   the transmitter of the signal connection is a user equipment of the cellular network, and the receiver of the signal connection is a another user equipment of the cellular network; or the transmitter and the receiver are a same user equipment; or
   the transmitter of the signal connection is a base station of the cellular network, and the receiver of the signal connection is a another base station of the cellular network; or the transmitter and the receiver are a same base station.

3. An apparatus according to claim 1 or 2,
   wherein each of the one or more signal connections is a connection between the transmitter and the receiver for transmitting the signal of the signal connection in a frequency band with a center frequency being greater than 24 GHz.

4. An apparatus according to one of the preceding claims,
   wherein the signal of each of the one or more signal connections is a channel state information-reference signal or is a synchronization signal or is a positioning reference signal or is another communication signal of the cellular network.

5. An apparatus according to one of the preceding claims,

   wherein the apparatus further comprises a beam-management based angle determiner (130) configured to provide an azimuth angle and an elevation angle of a pencil beam of at least one of the transmitter and the receiver to the motion detector (120),
   wherein the motion detector (120) is configured to detect the movement depending on the azimuth angle and the elevation angle of a pencil beam of at least one of the transmitter and the receiver.

**6.** An apparatus according to one of the preceding claims,
wherein the motion detector (120) is configured to estimate the movement depending on the phase difference of each of the one or more signal connections by determining movement change information for each coordinate of a one-dimensional coordinate system or of a two-dimensional coordinate system or of a three-dimensional coordinate system.

**7.** An apparatus according to one of the preceding claims,

wherein the one or more signal connections are three or more signal connections,
wherein the phase difference determiner (110) is configured to determine a phase difference for each of the three or more signal connections,
wherein the motion detector (120) is configured to detect the movement depending on the phase difference of each of the three or more signal connections,
wherein each of the three or more signal connections is a connection between a transmitter of the one or more transmitters and a receiver of the one or more receivers for transmitting a signal of the signal connection from a directional antenna of one or more directional antennas of said transmitter to a directional antenna of one or more directional antennas of said receiver, such that the transmitted signal is emitted along a wave propagation path,
wherein the wave propagation path of each of the three or more signal connections is spatially separated from any other wave propagation path of the three or more signal connections.

**8.** An apparatus according to claim 7,

wherein the one or more user equipments are three or more user equipments; and wherein a first one of the three or more signal connections is a connection between a base station of one or more base stations of the cellular network and a first user equipment of one or more user equipments of the cellular network; wherein a second one of the three or more signal connections is a connection between said base station and a second user equipment of the one or more user equipments; and wherein a third one of the three or more signal connections is a connection between said base station and a third user equipment of the one or more user equipments; wherein the three or more user equipments are attached in a fixed manner at an object that shall be motion detected, such that the three or more user equipments form a two-dimensional array or such that the three or more user equipments for a three-dimensional array; or
wherein a first one of the three or more signal connections is a connection between a base station of the one or more base stations of the cellular network and a first antenna of three or more antennas of a user equipment of the one or more user equipments of the cellular network; wherein a second one of the three or more signal connections is a connection between said base station and a second antenna of the three or more antennas, and wherein a third one of the three or more signal connections is a connection between said base station and a third antenna of the three or more antennas; wherein the user equipment is attached in a fixed manner at an object that shall be motion detected, and wherein the three or more antennas form a two-dimensional antenna array, or wherein the three or more antennas form a three-dimensional antenna array.

**9.** An apparatus according to claim 8,

wherein the three or more user equipments are attached in a fixed manner to an object of an infrastructure, or wherein the user equipment comprising the three or more antennas is attached in a fixed manner to the object of the infrastructure, and wherein the motion detector (120) is configured to conduct infrastructure monitoring by detecting a movement of the object of the infrastructure; or
wherein the three or more user equipments are attached in a fixed manner to a building, or wherein the user equipment comprising the three or more antennas is attached in a fixed manner to the building, and wherein the motion detector (120) is configured to conduct vibration and/or subsidence monitoring by detecting a movement of the building.

**10.** An apparatus according to one of the preceding claims,
wherein the motion detector (120) is configured to additionally employ data from a global navigation satellite system for a reference location measurement, or from a gyroscope, or from an accelerometer, or from a velocity meter, or from a strain meter, or from a gauge, or from a device for reference location measurement, or from a device for level measurement.

**11.** A user equipment of a cellular network,
wherein the user equipment comprises the apparatus according to one of the preceding claims.

**12.** A base station of a cellular network,
wherein the base station comprises the apparatus according to one of claims 1 to 10.

**13.** An apparatus for motion detection, wherein the apparatus comprises:

a phase difference determiner (110) configured for determining a phase difference of signal reflections of a signal, and
a motion detector (120) configured for detecting a movement depending on the phase difference of the signal reflections of the signal,
wherein the phase difference is a difference between a first signal reflection of the signal reflections of the signal that has been caused by a first reflection of the signal being transmitted at a first point in time by a transmitter of a cellular network and a second signal reflection of the signal reflections of the signal that has been caused by a second reflection of the signal being transmitted at a different second point in time by the transmitter of the cellular network,
wherein the transmitter, which transmits the signal to a receiver of the cellular network, is an entity of the cellular network.

**14.** A method for motion detection, wherein the method comprises:

determining a phase difference for each of one or more signal connections between a transmitter and a receiver of a cellular network, and
detecting a movement depending on the phase difference of each of the one or more signal connections,
wherein each of the one or more signal connections is a connection between the transmitter and the receiver for transmitting a signal of the signal connection from the transmitter to the receiver within the cellular network,
wherein the signal is a signal used for transmitting control data used for controlling user data communication within the cellular network, or is a signal used for supporting user data communication within the cellular network,
wherein the phase difference for each of the one or more signal connections indicates a difference between a first phase value of the signal of the signal connection received at the receiver of the signal connection at a first point-in-time and a second phase value of the signal of the signal connection received at the receiver of the signal connection at a different second point-in-time.

**15.** A method for motion detection, wherein the method comprises:

determining a phase difference of signal reflections of a signal, and
detecting a movement depending on the phase difference of the signal reflections of the signal,
wherein the phase difference is a difference between a first signal reflection of the signal reflections of the signal that has been caused by a first reflection of the signal being transmitted at a first point in time by a transmitter of a cellular network and a second signal reflection of the signal reflections of the signal that has been caused by a second reflection of the signal being transmitted at a different second point in time by the transmitter of the cellular network,
wherein the transmitter, which transmits the signal to a receiver of the cellular network, is an entity of the cellular network.

**16.** A computer program for implementing the method of claim 14 or 15 when being executed on a computer or signal processor.

Fig. 1

Fig. 2

EP 4 192 041 A1

Fig. 3

Fig. 4

EP 4 192 041 A1

5G RAN | ① ② ⋮ Ⓜ ⟶ ① ⋮ Ⓝ | 5G UEs | beam management (beam orientations) / CSI estimation (signal phase data) | movement vector estimation | ⟵ sensor data fusion (accelerometer, gyroscope, GNSS) | 5G UE | mobile edge computing using AI methods | 5G CN

410

Fig. 5

EP 4 192 041 A1

Fig. 6(a)

gain:   19.79 dBi
HPBW: 13.29°
SLL:   -10.88 dB
FBR:   14.23 dB

gain [dBi]

Fig. 6(b)

EP 4 192 041 A1

Fig. 7

Fig. 8

Fig. 9(a)

Fig. 9(b)

Fig. 10

Fig. 11

EP 4 192 041 A1

Fig. 12

Fig. 13

Fig. 14

EP 4 192 041 A1

Fig. 15

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 523 760 B1 (KRAVETS OLEKSIY [CA] ET AL) 20 December 2016 (2016-12-20) <br> * abstract; figure 1 * <br> * claims 1-8 * <br> * column 1 - column 3 * <br> * column 13 - column 16 * <br> ----- | 1-16 | INV. <br> H04W4/02 <br> H04W4/70 <br> G01S13/56 |
| X | US 2019/379434 A1 (LINDSKOG ERIK DAVID [US] ET AL) 12 December 2019 (2019-12-12) <br> * paragraph [0005] - paragraph [0028] * <br> * paragraph [0047] - paragraph [0087] * <br> * paragraph [0104] - paragraph [0128] * <br> ----- | 1-16 | |
| A | LU CHUNCHI ET AL: "Multi-Target Motion Detection Radar Sensor using 24GHz Metamaterial Leaky Wave Antennas", <br> 2019 IEEE MTT-S INTERNATIONAL CONFERENCE ON MICROWAVES FOR INTELLIGENT MOBILITY (ICMIM), IEEE, <br> 15 April 2019 (2019-04-15), pages 1-3, XP033556743, <br> DOI: 10.1109/ICMIM.2019.8726668 <br> [retrieved on 2019-05-30] <br> * the whole document * <br> ----- | 1-16 | |

TECHNICAL FIELDS
SEARCHED     (IPC)

H04W
G01S

The present search report has been drawn up for all claims

| Place of search | Date of completion of the search | Examiner |
|---|---|---|
| Munich | 27 April 2022 | Kraska, Nora |

EPO FORM 1503 03.82 (P04C01)

## ANNEX TO THE EUROPEAN SEARCH REPORT
## ON EUROPEAN PATENT APPLICATION NO.

**EP 21 21 1826**

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2022

| Patent document cited in search report | | Publication date | Patent family member(s) | | Publication date |
|---|---|---|---|---|---|
| US 9523760 | B1 | 20-12-2016 | CA | 3016018 A1 | 19-10-2017 |
| | | | CN | 108780145 A | 09-11-2018 |
| | | | EP | 3417309 A1 | 26-12-2018 |
| | | | JP | 6690009 B2 | 28-04-2020 |
| | | | JP | 2019513985 A | 30-05-2019 |
| | | | KR | 20180108835 A | 04-10-2018 |
| | | | US | 9523760 B1 | 20-12-2016 |
| | | | WO | 2017177303 A1 | 19-10-2017 |
| US 2019379434 | A1 | 12-12-2019 | NONE | | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHENGKUN JIANG ; JUNCHEN GUO ; YUAN HE ; MENG JIN ; SHUAI LI ; YUNHAO LIU.** mmVib: micrometer-level vibration measurement with mmwave radar. *Proceedings of the 26th Annual International Conference on Mobile Computing and Networking (MobiCom '20),* 2020, 1-13
- **CHENHAN XU ; ZHENGXIONG LI ; HANBIN ZHANG ; ADITYA SINGH RATHORE ; HUINING LI ; CHEN SONG ; KUN WANG ; WENYAO XU.** WaveEar: Exploring a mmWave-based Noise-resistant Speech Sensing for Voice-User Interface. *Proceedings of the 17th Annual International Conference on Mobile Systems, Applications, and Services (MobiSys '19),* 2019, 14-26
- **KLAUS WITRISAL ; PAUL MEISSNER ; ERIK LEITINGER ; YUAN SHEN ; CARL GUSTAFSON ; FREDRIK TUFVESSON ; KATSUYUKI HANEDA ; DAVIDE DARDARI ; ANDREAS F. MOLISCH ; ANDREA CONTI.** High-Accuracy Localization for Assisted Living: 5G systems will turn multipath channels from foe to friend. *IEEE Signal Processing Magazine,* March 2016, vol. 33 (2), 59-70
- **X. WANG ; C. YANG ; S. MAO.** PhaseBeat: Exploiting CSI Phase Data for Vital Sign Monitoring with Commodity WiFi Devices. *2017 IEEE 37th International Conference on Distributed Computing Systems (ICDCS),* 2017, 1230-1239
- **DEEPAK VASISHT ; SWARUN KUMAR ; DINA KATABI.** Decimeter-level localization with a single WiFi access point. *Proceedings of the 13th Usenix Conference on Networked Systems Design and Implementation (NSDI'16),* 2016
- **PEDRO MELGAREJO ; XINYU ZHANG ; PARAMESWARAN RAMANATHAN ; DAVID CHU.** Leveraging directional antenna capabilities for fine-grained gesture recognition. *Proceedings of the 2014 ACM International Joint Conference on Pervasive and Ubiquitous Computing (UbiComp '14),* 2014, 541-551
- **A. ADHIKARI ; A. HETHERINGTON ; S. SUR.** mmFlow: Facilitating At-Home Spirometry with 5G Smart Devices. *2021 18th Annual IEEE International Conference on Sensing, Communication, and Networking (SECON),* 2021, 1-9
- **TENG WEI ; SHU WANG ; ANFU ZHOU ; XINYU ZHANG.** Acoustic Eavesdropping through Wireless Vibrometry. *In Proceedings of the 21st Annual International Conference on Mobile Computing and Networking (MobiCom '15),* 2015, 130-141
- SAR Interferometry. **M. FURUYA.** Encyclopedia of Solid Earth Geophysics. Springer Nature, 2021, 1335-1343
- GPS, Tectonic Geodesy. **J. T. FREYMUELLER.** Encyclopedia of Solid Earth Geophysics. Springer, 2011, 119-137
- **A. MASOUDI ; T. P. NEWSON.** Contributed Review: Distributed optical fibre dynamic strain sensing. *Review of Scientific Instruments,* 2016, vol. 87 (011501
- **J. A. ZHANG ; F. LIU ; C. MASOUROS ; R. W. HEATH JR. ; Z. FENG ; L. ZHENG ; A. PETROPULU.** An Overview of Signal Processing Techniques for Joint Communication and Radar Sensing. *arXiv eess.SP e-prints,* February 2021
- **K. HEIMANN ; J. TIEMANN ; S. BÖCKER ; C. WIETFELD.** Cross-Bearing based Positioning as a Feature of 5G Millimeter Wave Beam Alignment. *2020 IEEE 91st Vehicular Technology Conference (VTC2020-Spring),* 2020, 1-5
- **C. D. MCGILLEM ; T. S. RAPPAPORT.** Infra-red location system for navigation of autonomous vehicles. *Proceedings. 1988 IEEE International Conference on Robotics and Automation,* 1988, vol. 2, 1236-1238
- **T. S. RAPPAPORT et al.** Millimeter Wave Mobile Communications for 5G Cellular: It Will Work!. *IEEE Access,* 2013, vol. 1, 335-349
- **X. GAO ; L. DAI ; S. HAN ; C.-L. I ; R. W. HEATH.** Energy-Efficient Hybrid Analog and Digital Precoding for MmWave MIMO Systems With Large Antenna Arrays. *IEEE Journal on Selected Areas in Communications,* April 2016, vol. 34 (4), 998-1009
- **A. BOURDOUX et al.** 6G White Paper on Localization and Sensing. *arXiv eess.SY e-prints,* June 2020
- **J. A. ZHANG et al.** Perceptive mobile networks: Cellular networks with radio vision via joint communication and radar sensing. *IEEE Vehicular Technology Magazine,* June 2021
- **A. ALI et al.** Leveraging sensing at the infrastructure for mmWave communication. *IEEE Comm. Mag.,* 2020, vol. 58 (7
- **M. ALLOULAH ; H. HUANG.** Future millimeter-wave indoor systems: A blueprint for joint communication and sensing. *Computer,* 2019, vol. 52 (7

- **J. A. ZHANG et al.** Multibeam for joint communication and radar sensing using steerable analog antenna arrays. *IEEE Transactions on Vehicular Technology,* 2019, vol. 68 (1
- **F. LIU et al.** Joint radar and communication design: Applications, state-of-the-art, and the road ahead. *arXiv eess.SP e-prints,* June 2019
- **A. BHUTANI et al.** The role of millimeter-waves in the distance measurement accuracy of a FMCW radar sensor. *Sensors,* 2019, vol. 19 (18
- **Y. WANG et al.** 28 GHz 5G-based phased-arrays for UAV detection and automotive traffic-monitoring radars. *2018 IEEE/MTT-S International Microwave Symposium,* 2018
- **J. HASCH et al.** Millimeter-wave technology for automotive radar sensors in the 77 GHz frequency band. *IEEE Transactions on Microwave Theory and Techniques,* 2012, vol. 60 (3
- **B. SLIWA ; N. PIATKOWSKI ; C.WIETFELD.** The channel as a traffic sensor: Vehicle detection and classification based on radio fingerprinting. *IEEE Internet of Things Journal,* 2020, vol. 7 (8
- **R. SNIEDER ; K. WAPENAAR.** Imaging with ambient noise. *Physics Today,* 2010, vol. 63 (9
- **P. JOUSSET ; T. REINSCH ; T. RYBERG ; H. BLANCK ; A. CLARKE ; R. AGHAYEV ; G. HERSIR ; J. HENNINGES ; M. WEBER ; C. KRAWCZYK.** Dynamic strain determination using fibre-optic cables allows imaging of seismological and structural features. *Nature Communications,* 2018, vol. 9 (2509
- Seismic instrumentation. **D. C. AGNEW.** Encyclopedia of Solid Earth Geophysics. Springer International Publishing, 2021, 1419-1425
- **M. TALICH.** Monitoring of horizonal movements of high-rise buildings and tower transmitters by means of ground-based interferometric radar. *The International Archives of the Photogrammetry, Remote Sensing and Spatial Information Sciences,* 2018, vol. 42-43

- **P.-Y. DECLERCQ et al.** Long-term subsidence monitoring of the Alluvial plain of the Scheldt river in Antwerp (Belgium) using radar interferometry. *Remote Sensing,* 2021, vol. 13 (6
- **M. MATSUMOTO et al.** Innovative tracking system for next generation FSO systems under massive earthquakes. *2015 International Conference on Optical Network Design and Modeling,* 2015
- **J. NACHTIGALL et al.** The challenges of using wireless mesh networks for earthquake early warning systems. *2009 Second International Conference on Advances in Mesh Networks,* 2009
- **L. GRANNEMANN et al.** Urban outdoor measurement study of phased antenna array impact on millimeter-wave link opportunities and beam misalignment. *IEEE Trans. on Wireless Comm.,* 2021, vol. 20 (3
- **N. HOULIÉ et al.** New approach to detect seismic surface waves in 1Hzsampled GPS time series. *Scientific Reports,* July 2011, vol. 1, 44
- **E. DAHLMAN ; S. PARKVALL ; J. SKOLD.** 5G NR: The Next Generation Wireless Access Technology. Academic Press, Inc, 2018
- **B. NUSS ; Y. L. SIT ; T. ZWICK.** 3D radar image fusion using OFDM-based MIMO radar. *2016 German Microwave Conf. (GeMiC),* 2016
- *Ansys HFSS SBR+,* 29 September 2021, https://www.ansys.com/content/dam/ resource-center/application-brief/ansys-sbr-plus.pdf
- *Ansys HFSS for Antenna Simulation,* 29 September 2021, https://www.ansys.com/content/dam/product/electronics/hfss/ab-ansyshfss-for-antenna-simulation.pdf
- **C. MOLER.** *What is the condition number of a matrix?,* 29 September 2021, https://blogs.mathworks.com/cleve/2017/07/17/what-is-the-condition-number-of-a-matrix